(19) Europäisches Patentamt
European Patent Office
Office européen des brevets

(11) **EP 4 314 844 B1**

(12) **EUROPEAN PATENT SPECIFICATION**

(45) Date of publication and mention
of the grant of the patent:
**01.07.2026 Bulletin 2026/27**

(21) Application number: **22715366.5**

(22) Date of filing: **30.03.2022**

(51) International Patent Classification (IPC):
**G01P 15/093** (2006.01)    **G01C 19/5642** (2012.01)
**G01V 1/18** (2006.01)    **G01P 15/13** (2006.01)
**G01P 15/18** (2013.01)    **G01H 9/00** (2006.01)

(52) Cooperative Patent Classification (CPC):
**G01C 19/5642; G01H 9/00; G01P 15/093;**
**G01P 15/131; G01P 15/18;** G01V 1/18

(86) International application number:
**PCT/GB2022/050806**

(87) International publication number:
**WO 2022/208090 (06.10.2022 Gazette 2022/40)**

(54) **INERTIAL SENSOR AND INERTIAL MEASUREMENT UNIT**

INERTIALSENSOR UND INERTIALMESSEINHEIT

CAPTEUR INERTIEL ET UNITÉ DE MESURE INERTIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2021 GB 202104629**

(43) Date of publication of application:
**07.02.2024 Bulletin 2024/06**

(73) Proprietor: **Zero Point Motion Ltd**
**Bristol BS1 5DD (GB)**

(72) Inventor: **LI, Ying Lia**
**Bristol, BS1 5DD (GB)**

(74) Representative: **HGF**
**HGF Limited**
**4th Floor, 1 City Square**
**Leeds LS1 2ES (GB)**

(56) References cited:
**WO-A1-2019/012245    WO-A1-2020/243670**
**US-B2- 8 020 440**

## Description

## Technical Field

The present disclosure relates generally to inertial sensors and inertial measurement units.

## Background

As the functionality and capabilities of mobile devices continues to improve, mobile devices are now likely to contain at least one micro-electro-mechanical system (MEMS) inertial sensor for determining the position of the mobile device. Such a sensor is known from WO 2020/243670 A1.

MEMS inertial sensors, such as accelerometers and gyroscopes, operate by determining the presence and magnitude of an inertial force from the displacement of a test mass as it moves in response to that inertial force. This displacement changes the gap between the movable test mass and a fixed electrode, generating a change in capacitance that is detected in order to determine the inertial force. However, these sensors are prone to excessive noise and drift due to, for example, imperfections in fabrication, non-linearity in the test mass response, parasitic capacitances and patch potentials. To counteract the physical causes of noise and drift, the motion of the test mass may be regulated using an electrostatic force. However, the electrostatic force itself causes noise including parasitic and stray capacitance in the electrical circuits of the sensor and on the surface of the test mass. The noise caused by the electrostatic force interferes with the capacitive readout and may add additional noise to the output signal, however, the noise contribution by electrostatic actuation is generally lower than that of the capacitive readout. Moreover, the capacitive readout interferes with the actuation using the electrostatic force. The noise contributions from both the electrostatic force and the capacitive readout reduce the accuracy and sensitivity of such inertial sensors.

It is an object of embodiments of the invention to at least mitigate one or more problems known in the art.

## Summary

According to an aspect of the invention an inertial sensor is provided. The inertial sensor comprises one or more microresonators, each microresonator supporting a corresponding optical resonance. The inertial sensor further comprises a micro-electro-mechanical inertial test mass suspended adjacent to and non-contiguous with the one or more microresonators, the test mass being thicker than each microresonator and being deflectable under the application of an inertial force. The inertial sensor further comprises one or more electrodes for counteracting a deflection of the test mass with an electrostatic force. The inertial sensor further comprises one or more optical couplers for coupling light into and out of a corresponding microresonator. The inertial sensor further comprises one or more detectors for detecting light received from the one or more microresonators by the one or more optical couplers. A change in a spacing between the test mass and at least one microresonator causes a change in the optical resonance characteristics of that microresonator.

It is a generally accepted view that fabricating devices that integrate electronics, mechanics and optics is difficult and time consuming and can result in larger devices, particularly where multiple connections between the electronic components and optical components are required. A substantial number of complex steps would be required to design and fabricate such devices. For this reason, and due to other considerations such as size incompatibility of photonic structures and electromechanical structures and the already complex fabrication required to create monolithic photonic structures and electromechanical structures, current inertial sensors are either purely electromechanical or purely optical. Replacing purely electromechanical inertial sensors (in which both readout and actuation are performed using electrodes) with purely optical inertial sensors (in which both readout and actuation are performed using optical means) aids in removing the disadvantages mentioned above regarding capacitive readout. Using optical actuation may also aid in regulating the motion of the test mass.

For the reasons mentioned above, there is a prejudice against combining components from optical and electromechanical sensors. However, the inventor has used inventive skill to provide an inertial sensor that combines a cavity enhanced optomechanical readout mechanism with electrostatic actuation. The inventor has also come to the surprising realisation that the combination of a cavity enhanced optomechanical readout mechanism and electrostatic actuation of the test mass provides significant advantages over purely electromechanical inertial sensors and purely optical inertial sensors. In particular, utilising voltage only for the actuation of the test mass and not for the sensing enables a significant reduction in noise and, consequently, an increase in sensitivity of the sensor.

The use of voltage for the actuation also enables large test masses to be used without high optical power being required, as they can be actuated effectively and efficiently using voltage. This is not possible when using an inertial sensor having optical means for actuation because the test masses need to be small and thin in order to be actuated using the optical means. Large test masses, in particular, thick test masses, are advantageous as they have a high mechanical sensitivity and so provide a larger and more sensitive mechanical response to inertial forces. Moreover, using resonant light for the optomechanical readout mechanism provides even more sensitivity as the motion of the test mass shifts the resonance condition, amplifying the signal and not the noise.

The combination of optomechanical sensing of the displacement of the test mass (using one or more microresonators and one or more optical couplers) in combination with electrostatic actuation of the test mass (using one or more electrodes) in the inertial sensor provides a hybrid optical-electro-mechanical sensor with improved sensitivity, and an improved signal to noise ratio, when compared to an inertial sensor based on capacitive sensing, without compromising on the size of the test mass. Such a sensor retains the ability to actuate a large test mass for a large mechanical response to inertial forces.

The hybrid nature of the inertial sensor provides for both improved sensitivity and improved response, something that would not be possible with an all optical sensor. Such an improved response is important in order to effectively tune or calibrate the sensor sensitivity. In fact, by providing sufficient actuation of the test mass, closed loop operation can be implemented effectively such that the drift, for example thermally induced drift, or non-linear responses of the test mass can be better controlled. Accordingly, the sensor is less likely to encounter a positioning error. The inertial sensors described herein can produce extremely low noise measurements, enabling them to track even very slight changes in position.

The combination of the optical readout mechanism and the closed loop operation allows for the best balance of sensitivity, control and long-term stability to provide a sensitive and stable inertial sensor that can be precisely controlled to achieve the necessary measurements.

The test mass may have an average thickness of more than a micron.

The test mass may have an average thickness in the order of tens or hundreds of microns.

The test mass is thicker than the microresonator. The test mass may have an average thickness of more than or equal to 10 microns. The test mass may have an average thickness of less than 500 microns. The test mass may have an average thickness between 20 and 30 microns. The test mass may be significantly larger than the microresonator. The test mass may be significantly thicker, for example 100 times thicker, than the microresonator. The test mass may have a larger surface area than the microresonator. The surface area of the test mass may be less than 1 millimetre by 1 millimetre. The surface area of the test mass may be approximately 250 microns by 250 microns. The diameter of the microresonator may be approximately 100 microns. The large size of the test mass provides an improved response to acceleration or rate of rotation of the sensor.

The distance between the test mass and the one or more microresonators may be equal to or less than 1 micron. This may be the distance when the inertial sensor is at rest i.e. when there is no deflection of the test mass. Providing the test mass within a small distance from the one or more microresonators results in a larger scale factor of response, meaning there is a larger change in the outputted optical signal for the same amount of inertial force detected.

The inertial sensor may comprise at least two microresonators, at least two optical couplers, and at least two detectors. A change in a first spacing between the test mass and a first of the two microresonators and a change in a second spacing between the test mass and a second of the two microresonators may cause a differential change in the optical resonance characteristics of the two microresonators.

The test mass may be suspended between a first microresonator and a second microresonator.

The test mass may include a protrusion, the protrusion located between a first microresonator and a second microresonator. The protrusion may act as an optical channel to guide photons that have escaped from the first and/or second microresonator. This enhances the sensitivity of the sensor because the photons are absorbed or transmitted by the protrusion.

The test mass may further include one or more additional protrusions, the one or more additional protrusions each located between two microresonators.

At least two of the electrodes may each include a finger that is stationary with respect to the sensor and the test mass may include a finger that is movable with respect to the inertial sensor, the movable finger of the test mass located between the stationary fingers of the at least two electrodes such that the fingers of the test mass and at least two electrodes are interdigitated.

The motion of the finger is strongly coupled to the motion of the test mass such that a movement of the finger results in a movement of the test mass as a whole. Thus, the stationary fingers of the electrodes are used to control the movement of the finger of the test mass and consequently control the movement of the test mass. The finger may be integral to or rigidly affixed to the test mass so as to be stationary with respect to the test mass. Alternatively, the finger of the test mass may have its own mechanical degree(s) of freedom, for example like a cantilever mode; however the finger of the test mass may be arranged such that it is only used to move or maintain the position of the entire test mass.

The one or more microresonators may be radially separated from the test mass.

The one or more electrodes and/or the one or more microresonators may be fixed relative to the inertial sensor.

The inertial sensor may be for detecting acceleration or rate of rotation.

The one or more microresonators may be whispering gallery mode resonators.

The one or more microresonators may each have an evanescent field extending beyond the edge of that microresonator in use. The amount the evanescent field extends beyond the edge of the microresonator may be based on the size of the wavelength of the light coupled into the optical coupler. The evanescent field may extend at least 1 micron beyond the edge of that microresonator in use. This provides a particularly effective sensor when the wavelength of the light coupled into the optical coupler is 1550nm.

The test mass may be larger than each of the one or more microresonators.

The one or more electrodes may be used to control the long-term stability properties of the inertial sensor.

The inertial sensor may further comprise a light source for transmitting light into each of the one or more optical couplers.

The light transmitted into each of the one or more optical couplers may be broadband light.

The light transmitted into each of the one or more optical couplers may be coherent single frequency light.

The change in the optical resonance characteristics may be a shift in the optical resonance and/or a broadening of the optical resonance.

The one or more microresonators may each have a different optical resonance.

According to another aspect of the invention an inertial measurement unit is provided. The inertial measurement unit comprises one or more inertial sensors as described herein and a processor. The processor is configured to, for each inertial sensor, receive an electrical signal from the one or more detectors. The processor is further configured to, for each inertial sensor, detect a change in the optical resonance characteristics of the one or more microresonators in response to a change in the spacing between the test mass and the one or more microresonators. The processor is further configured to, for each inertial sensor, determine the acceleration and/or rate of rotation of the inertial sensor based on the change in optical resonance characteristics of the one or more microresonators. The processor is further configured to, for each inertial sensor, control the electrostatic force of the one or more electrodes based on the change in optical resonance characteristics of the one or more microresonators.

The inertial measurement unit may comprise six inertial sensors as described herein, the six inertial sensors comprising a first inertial sensor for detecting acceleration in a first axis, a second inertial sensor for detecting acceleration in a second axis perpendicular to the first axis, a third inertial sensor for detecting acceleration in a third axis perpendicular to the first axis and the second axis, a fourth inertial sensor for detecting rate of rotation in the first axis, a fifth inertial sensor for detecting rate of rotation in the second axis and a sixth inertial sensor for detecting rate of rotation in the third axis. The processor may be further configured to calculate the total acceleration and/or rate of rotation of the inertial measurement unit based on the acceleration and/or rate of rotation of each inertial sensor.

The control of the electrostatic force of an electrode of the one or more electrodes may be based on the change in the optical resonance characteristics of a corresponding microresonator.

For each inertial sensor for detecting rate of rotation, the processor may be configured to control the electrostatic force of the one or more electrodes to cause the test mass to vibrate at a fixed frequency in a first direction. The detection of the change in the optical resonance characteristics of the one or more microresonators may be in response to the change in the spacing between the test mass and the one or more microresonators in a second direction perpendicular to the first direction at the fixed frequency.

The processor may be further configured to calibrate each inertial sensor by changing the electrostatic force of each electrode and detecting a change in the optical resonance characteristics of each microresonator.

Many modifications and other embodiments of the inventions set out herein will come to mind to a person skilled in the art to which these inventions pertain in light of the teachings presented herein. Therefore, it will be understood that the disclosure herein is not to be limited to the specific embodiments disclosed herein. Moreover, although the description provided herein provides example embodiments in the context of certain combinations of elements, steps and/or functions may be provided by alternative embodiments without departing from the scope of the invention.

**Brief Description Of The Drawings**

Embodiments of the invention will now be described, by way of example only, with reference to the accompanying drawings, in which:

Figure 1 shows a diagram of an example inertial sensor;
Figure 2 shows a diagram of the optomechanical element and an example output of the example inertial sensor.
Figure 3 shows example graphs of changes in characteristics of the example inertial sensor;
Figure 4 shows an example flowchart;
Figure 5 shows a diagram of an optomechanical element and example outputs of the example inertial sensor before and during acceleration;
Figure 6 shows a diagram of an example inertial sensor for measuring acceleration;
Figure 7 illustrates a control loop feedback system for use when the inertial sensor is for detecting acceleration;
Figure 8 illustrates the optomechanical element and example outputs of the example inertial sensor before and during rotation;
Figure 9 shows a diagram of an example inertial sensor for measuring a rate of rotation;
Figure 10 shows a diagram of another example inertial sensor for measuring a rate of rotation;

Figure 11 illustrates a control loop feedback system for use when the inertial sensor is for detecting rate of rotation;

Figure 12 shows a block diagram of an example inertial measurement unit.

Throughout the description and drawings, like reference numerals refer to like parts.

## Detailed Description

Whilst various embodiments are described below, the invention is not limited to these embodiments, and variations of these embodiments may well fall within the scope of the invention which is defined by the appended claims.

In what follows, inertial sensors are described. Whilst example accelerometers and gyroscopes are provided, the inertial sensor described herein is applicable more generally, as will be appreciated by the skilled person.

As will be appreciated upon reading the detailed description, a microresonator is a closed-circuit object that supports an optical resonance. A microresonator supporting an optical resonance means the light that enters the closed circuit of the microresonator is amplified at at least one resonant frequency due to constructive interference and total internal reflection in the microresonator. Example materials for microresonators include silicon, silica, silicon nitride and crystalline fluorides. Example diameters of microresonators range from microns to hundreds of microns.

As will be appreciated upon reading the detailed description, a test mass refers to a mechanical structure for use in in MEMS sensors. Example materials for test masses are silicon and quartz.

As will be appreciated upon reading the detailed description, an optical coupler is a means to couple light into and out of a microresonator. The optical coupler may be a waveguide. The optical coupler may be attached to a waveguide. The optical coupler may guide light from a light source into a microresonator. The optical coupler may guide light from a microresonator to a detector. The optical coupler may be a buried waveguide, a ridge waveguide or a rib waveguide. The optical coupler may be fabricated at the same time as the microresonator.

As will be appreciated upon reading the detailed description, a change in the optical resonance characteristics is any change in the characteristics of the optical resonance. The change in the optical resonance characteristics may be a change in the line shape of the optical resonance characteristics, for example a reduction of the peak amplitude. The change in the optical resonance characteristics may be a change in location of the optical resonance.

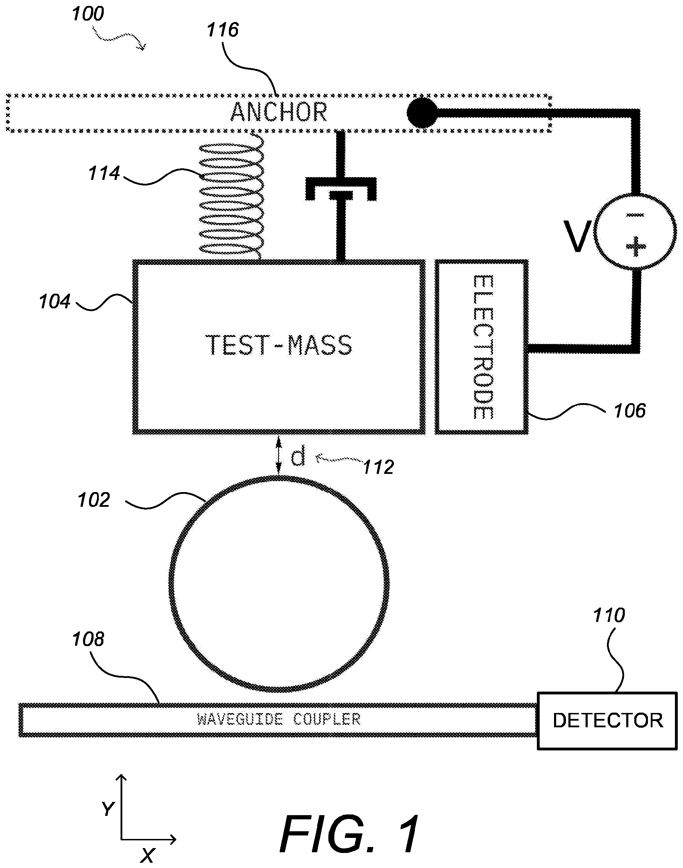

Figure 1 shows a diagram of an example inertial sensor 100. The inertial sensor 100 comprises a microresonator 102 that supports an optical resonance. The inertial sensor 100 further comprises a micro-electromechanical inertial test mass 104 suspended adjacent to and non-contiguous with the microresonator 102. That is, the test mass 104 is arranged within the inertial sensor such that it is close to the microresonator 102 but separated from the microresonator 102 by a distance/spacing "d" (labelled 112 in Figure 1). The test mass 104 is deflectable under the application of an inertial force. That is, under the influence of an inertial force the spacing 112 between the test mass 104 and the 102 may change temporarily. The inertial sensor 100 further comprises an electrode 106 for counteracting a deflection of the test mass 104 with an electrostatic force. The inertial sensor 100 further comprises an optical coupler 108 for coupling light into and out of the microresonator 102. The inertial sensor further comprises a detector 110 for detecting light received from the microresonator 102 by the optical coupler 108. A change in the spacing 'd' 112 between the test mass 104 and microresonator 102 causes a change in the optical resonance characteristics of that microresonator 102.

The inertial sensor 100 detects the inertial forces caused by, for example, acceleration and rotation, based on the displacement of the test mass 104 as it moves in response to the inertial forces. In more detail, the inertial sensor 100 of Figure 1 operates as follows. When the inertial sensor 100 is moved, for example as part of a device, the inertial sensor accelerates to a particular velocity or rotates to a particular angle. The test mass is suspended by suspension means 114, which in this example is a spring, connected to an anchor 116. The test mass 104 responds to the inertial force caused by acceleration or rate of rotation and is displaced based on the size and direction of the inertial force. The displacement of the test mass 104 may be proportional to the inertial force caused by acceleration or rate of rotation. This displacement changes the gap 'd' 112 between the test mass 104 and microresonator 102 which causes a change in the optical resonance characteristics of that microresonator 102. The optical coupler 108 receives light and couples the light to and from the microresonator 104. One or more characteristics of the light coupled from the microresonator 104 change based on the change in the optical resonance characteristics of the microresonator 104 and such a change is detected at the detector 110. This change in the transmission output at the detector 110 is related to the displacement of the test mass and consequently can be used to compute the inertial force experienced by the inertial sensor 100. Thus, the microresonator 104, optical coupler 108, detector 110, test mass 104, spring 114 and anchor 116 together form the sensor's optomechanical readout mechanism and enable the determination of inertial force based on the detected change in optical transmission at the detector 110.

To be able to control the movement of the test mass 104, an electrode 106 is provided and a voltage may be applied to the electrode 106. The electrode 106 is configured to output an electrostatic force due to the applied voltage to actuate the test mass 104. The size of the electrostatic force is based on the size of the applied voltage. As the size of the actuation is based on the size of the electrostatic force, the size of the actuation is also based on the applied voltage and can be controlled by differing the voltage applied to the electrode 106. Thus, the electrode 106 can change the position of the test mass 104 with respect to the microresonator by moving the test mass 104 using the electrostatic force from the applied voltage. Such actuation may be referred to as capacitive actuation. The electrode 106 may be fixed with respect to the sensor 100. The electrode may move the test mass in the X direction and/or the Y direction. The electrode may also move the test mass in the Z direction (not shown).

An inertial sensor operating in open loop configuration, without actuation of the test mass, is prone to drift over time due to temperature fluctuations, biases and non-linearities at large test-mass displacements. The inertial sensor therefore implements a closed loop system using the feedback mechanism of the electrode 106 actuating the test mass. The actuating force of the electrode 106 can be used to actively restore the test-mass back to equilibrium, extending the linearity and sensing range, and reducing or counteracting the drift. The actuation force from the electrode 106 can be adjusted using feedback to ensure the test mass 104 is in the position that would provide the optimal sensor measurement. Thus, the electrode 106 improves the long-term stability of the inertial sensor. The electrode 106 may also be used to dampen any vibration of the test mass 104. The optomechanical reading combined with the electromechanical control provides a highly sensitive inertial sensor.

Whilst only one of each component of the inertial sensor 100 is illustrated in Figure 1, the inertial sensor 100 may comprise a plurality of each component. The inertial sensor 100 may comprise a plurality of microresonators 102, electrodes 104, springs 114, anchors 116 and optical couplers 108. The microresonator may be fixed relative to the sensor. In Figure 1, the test mass 104 is positioned radially from the microresonator 102, however, the test mass 104 may be located in other positions relative to the microresonator 102.

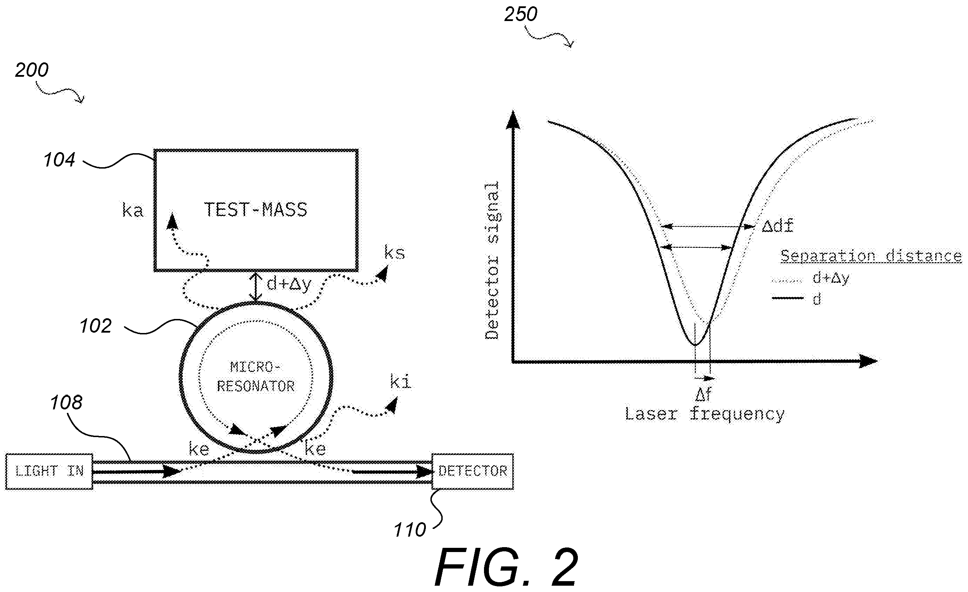

The optical resonance characteristics change due to the displacement of the test mass. The change in optical resonance characteristics may be a shift in resonance wavelength and/or a broadening or deepening of the curve of the optical resonance in response to the test mass moving with respect to the microresonator. The shift may occur in either direction to progressively become either red detuned or blue detuned. The broadening or deepening is due to a change in optical losses, for example, dissipative or scattering optomechanical coupling, as explained below in relation to Figure 2.

As illustrated in Figure 1, the test mass may be suspended using suspension means 114 in the form of a spring. One end of the spring is fixed relative to the sensor by being connected to an anchor 116 and the other end of the spring is connected to the test mass and suspends the test mass. The spring 114 enables displacement of the test mass 104. Whilst the spring 114 and anchor 116 have been illustrated in this Figure and throughout the specification, the skilled person would appreciate that other types of suspension means can be used within the inertial sensor 100 and any of the inertial sensors described herein instead of the spring 114 and anchor 116.

The microresonator 102 is placed close to the test mass 104 such that the deflection of the test mass 104 causes a change in the optical resonance characteristics of that microresonator 102.

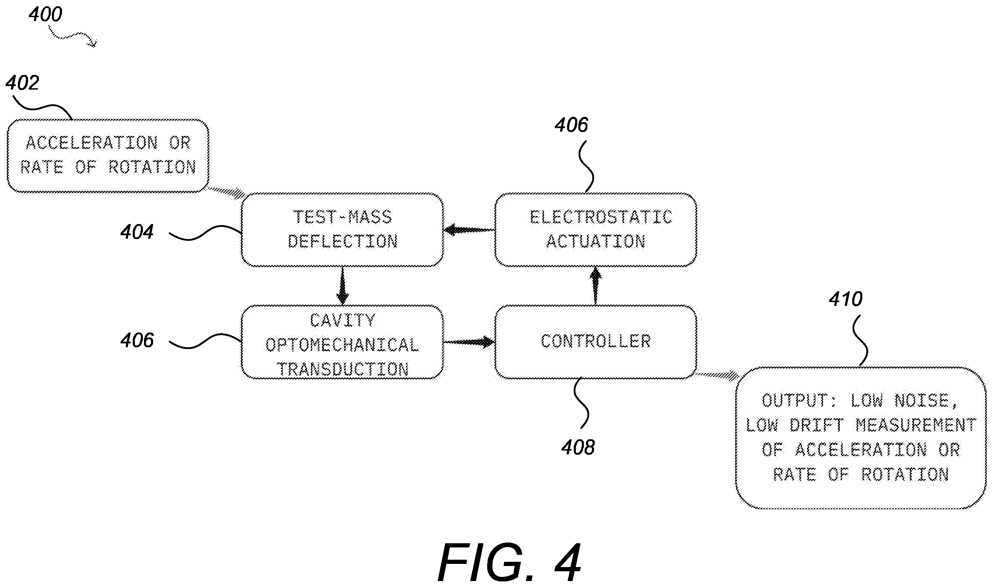

The electrostatic actuation provided by the electrode 106 may be controlled by a controller (not shown in Figure 1) as described further below in relation to Figure 4. The inertial sensor may comprise the controller or the controller may be external to the inertial sensor 100.

As illustrated by the voltage source in Figure 1, a voltage is applied to the electrode 106. The anchor may be grounded such that the applied voltage is the potential difference between the electrode 106 and the anchor 116. The voltage applied may change based on the electrostatic force required for counteracting the deflection of the test mass 104. Thus, whilst a voltage source is illustrated in Figure 1, the voltage may instead be applied by the controller mentioned above (not shown in Figure 1).

The detector 110 may be any device that converts an optical signal into an electrical signal. The detector 110 may be a photodetector. The detector 110 may comprise a processor for processing the optical signal to calculate the inertial force sensed by the sensor. The detector 110 may receive the optical signal from the optical coupler 108 and microresonator 102 as its input and output the inertial force measurement. Alternatively, the controller mentioned above (not shown in Figure 1) may be used to calculate the inertial force based on the optical signal detected by the detector 110.

The optical coupler 108 may be coupled to a waveguide. The optical coupler 108 may be a waveguide that is arranged in close proximity to the microresonator 102 such that light is coupled from the waveguide to the microresonator 102 and from the microresonator 102 to the waveguide. Light from a light source (not shown in Figure 1) may be input into the optical coupler 108 to be transmitted into and out of the microresonator 102 to the detector 110. The light source may be within the sensor or may be not be a part of the sensor. For example, the light source may be connected to a plurality of inertial sensors and may supply light to the plurality of inertial sensors. The light input into the optical coupler 108 may be broadband light or coherent single frequency light.

The test mass 104 is displaced towards or away from the microresonator, for example, along the Y axis, the X and Y axis being illustrated in Figure 1. The test mass 104 may, additionally or alternatively, be displaced laterally with respect to the microresonator, for example, along the X axis. The test mass may be made of silicon.

The microresonator 102 illustrated in Figure 1 is a ring resonator, however this microresonator can be replaced with another type of microresonator 102 such as a disk microresonator or a racetrack microresonator.

The microresonator 102 illustrated in Figure 1 has at least a portion of an evanescent field extending beyond the edge of the microresonator 102 when the sensor is in use. The evanescent field may extend by 1 micron from the edge of the microresonator 102. The evanescent field extending substantially from the edge of the microresonator 102 enhances the sensitivity of the sensor as the interaction between the evanescent field and test mass 104 is increased.

The microresonator 102 may be a whispering gallery mode microresonator. When the microresonator is a whispering gallery mode microresonator, it traps light as a whispering gallery mode optical resonance and has an evanescent field extending beyond its edge. As the test mass 104 displaces, it will interact with the evanescent field and alter the properties of the microresonator as it interacts with the evanescent field, changing the effective refractive index of the microresonator. This change shifts the whispering gallery mode optical resonance of the microresonator. Thus, when the test mass 104 moves within the evanescent field of the whispering gallery mode microresonator, the optical resonance of the microresonator is perturbed and the characteristics of the optical resonance are changed.

A device may comprise an inertial sensor 100 for detecting acceleration and an inertial sensor 100 for detecting rate of rotation. Such a device could be utilised for position tracking.

Figure 2 shows an illustration of the optomechanical element 200 of the example inertial sensor 100 and an example output 250. The illustration of Figure 2 is to aid in understanding of the operation of the optomechanical element of the inertial sensor 100 and therefore does not include all the components of the inertial sensor of Figure 1. The following explanation is for when the microresonator 102 is a whispering gallery mode (WGM) microresonator, however, it should be understood that the microresonator 102 of Figure 1 may be a different type of microresonator. The WGM microresonator has an evanescent field. The Figure shows the coupling rates $k_i$, $k_e$, $k_a$ and $k_s$ which can be used to model the rate of transfer of the photons.

Light is exchanged from the optical coupler 108 to the microresonator 102 and then back from the microresonator 102 to the optical coupler 108 at a rate defined by extrinsic coupling rate $k_e$, as shown by the arrows entering and leaving the microresonator 102. The extrinsic coupling rate, for example, defines the change in the (slowly varying part of the) normalised intracavity electromagnetic field per second, in units of Hertz. When light enters the microresonator 102, it leaks out due to internal losses defined by an intrinsic loss rate of $k_i$. The test mass may be displaced by an inertial force which may be caused by acceleration or rotation of the sensor. The displacement of the test mass is based on the size and direction of the inertial force. If a test mass 104 approaches the edge of the microresonator 102 at a distance 'd', the test mass 104 is displaced within the evanescent field and interacts with the evanescent field, causing a change in the effective refractive index of the WGM microresonator which shifts the resonant frequency of the microresonator 102. The physical presence of the test mass causes some photons to leak out of the microresonator 102 due to both scattering effects, resulting in scattering loss (characterised by $k_s$), and light coupling into the test mass through absorption or being guided away, as illustrated by coupling loss $k_a$ in Figure 2. For example, photons may be absorbed and/or scattered on interaction with the surface of the test mass due to surface roughness. The displacement of the test mass 104 alters the scattering loss $k_s$ because $k_s$ has an exponential dependence on the distance 'd' between the test mass 104 and the microresonator 102 as shown in the following equation, with alpha being the effective decay length of the evanescent field and $k_{s0}$ being a constant:

$$k_s = k_{s0}e^{-alpha*d}$$

The displacement of the test mass 104 also alters the coupling loss $k_a$ for corresponding reasons. The displacement of the test mass 104, and consequently the change in distance 'd' between the test mass 104 and the microresonator 102, changes the refractive index and consequently changes the detuning $\Delta$. The detuning $\Delta$ refers to the detuning of the light from the initial WGM resonance frequency $\omega_0$ and can be defined as $\Delta = \omega - \omega_0$. Thus, as the optical resonance of the microresonator is shifted, the detuning is changed

Accordingly, the changes in the effective refractive index of the WGM microresonator 102 and the coupling rates cause a frequency shift and broadening of the WGM resonance. In particular, the WGM optical resonance is broadened by the scattering coupling rate $k_s$ and/or the absorption or transmission coupling rate $k_a$ and shifted by the change in effective refractive index which causes a change in detuning $\Delta$.

The transmitted light intensity $T$ at the output of the optical coupler 108 changes based on the position of the test mass 104 due to the change in WGM optical resonance. As shown in the following equation, in this model T depends on the coupling rates and the detuning and is normalised to 1:

$$T = \left| 1 - \frac{k_e}{\frac{k_i}{2} + \frac{k_e}{2} + \frac{k_a}{2} + \frac{k_s}{2} + i\Delta} \right|^2$$

The measurement of the transmission intensity taken at the detector 110 may be compared to a previous value or a reference value to find the change in transmission. This enables the change in optical resonance to be detected. The change in optical resonance is indicative of the displacement of the test mass. Consequently, from the detection of the change in optical resonance, the inertial force on the test mass can be computed.

In summary, an inertial force may cause a displacement of the test mass, the displacement being based on the size and direction of the inertial force. The displacement of the test mass 104 and consequent change in distance between the test mass 104 and microresonator 102 causes a change in the coupling rates and the refractive index of the microresonator 102 which causes a change in the detuning. The change in detuning changes the intracavity electromagnetic field and light intensity at the output of the waveguide coupler. Consequently, changes in the optical resonance frequency of the microresonator 102 are detectable at the detector 110. The graph 250 of Figure 2 illustrates such a change.

In the initial position of the inertial sensor 100 when there is no inertial force incident on the sensor, the test mass 104 is located at a distance d from the microresonator 102. The detection signal when the test mass 104 is located at a distance d from the microresonator 102 is shown by the solid line in the graph 250 of Figure 2. When there is an inertial force due to, for example, acceleration or rotation of the sensor, the test mass 104 may be displaced away from the microresonator 102 by $\Delta y$ and so is at a distance of $d + \Delta y$ from the microresonator 102. The detection signal when the test mass 104 is located at a distance $d + \Delta y$ from the microresonator 102 is shown by the dotted line in the graph 250 of Figure 2. As illustrated in the graph 250, there is a change in resonant frequency $\Delta f$ between the solid line (corresponding to the initial distance between the test mass 104 and the microresonator 102) and the dotted line (corresponding to the distance of the test mass 104 from the microresonator 102 after deflection under the inertial force) caused by a change in the effective refractive index of the microresonator 102. There is also a change in the resonance linewidth $\Delta df$ caused by light leaving the microresonator due to scattering (linked to coefficient $k_s$) and/or absorption or transmission (linked to coefficient $k_a$).

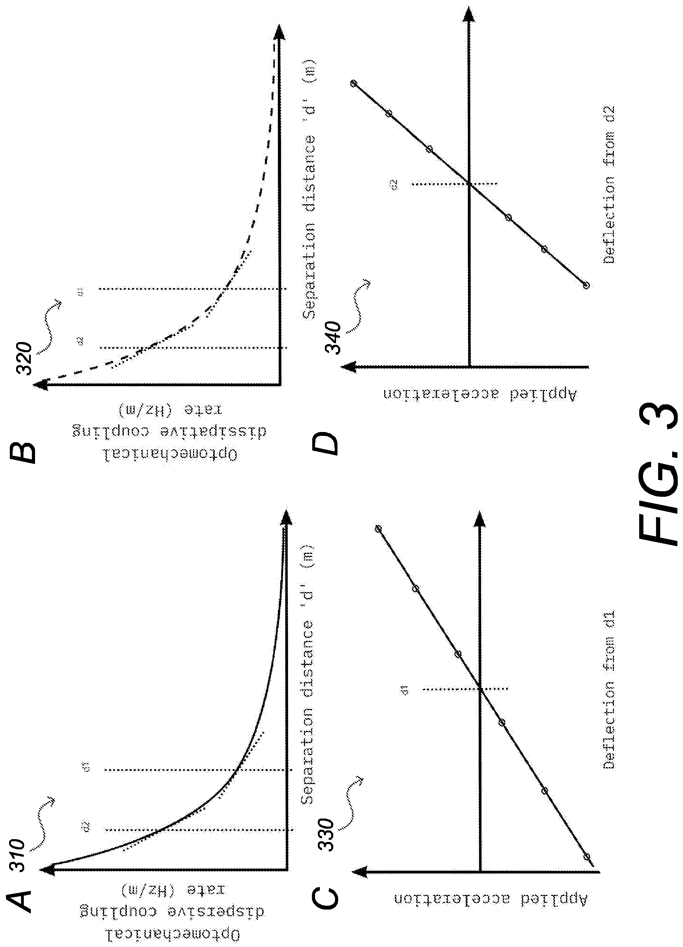

Figure 3 shows example graphs of changes in characteristics of the inertial sensor. These graphs are to illustrate how the inertial force is detected. In order to detect the inertial force from the displacement of the test mass 104 using the transmission output detected at the optical coupler 108, a scale factor may be defined, for example, a change in transmission per nanometer of displacement. The relation between transmission and displacement is provided above in relation to Figure 2 and shows that the transmission, and therefore the scale factor, is based on the coupling rates and the detuning. The graph A 310 illustrates the change in the optomechanical dispersive coupling rate with separation distance 'd'. The optomechanical dispersive coupling rate is the change in resonant frequency per meter of motion and is in units of Hz/m. The graph B 320 illustrates the change in the optomechanical dissipative coupling rate with separation distance 'd'. The optomechanical dissipative coupling rate is the change in linewidth per meter of motion, which indicates the change in losses per meter of motion, and is in units of Hz/m. The optomechanical dispersive coupling rate has an exponential dependence on the separation distance 'd' because the optical resonance shift has an exponential dependence due to the exponential nature of the evanescent fields. The optomechanical dissipative coupling rate has an exponential dependence on the separation distance 'd' because the magnitude of scattering loss $k_s$ and coupling loss $k_a$ has an exponential dependence on separation distance 'd' due to the exponential nature of evanescent fields. Therefore, the scale factor is based on the optomechanical coupling rates. As shown in graphs A and B 310, 320, due to the exponential dependence of both coupling rates on the separation distance 'd', the response to the displacement of the test mass is non-linear.

To measure the inertial force, an equilibrium position may be determined. This may be or correspond to the separation distance between the test mass 104 and microresonator 102 when the test mass 104 is at its initial position. Small motions about the equilibrium position can then be detected. As such small motions are detected about an equilibrium position, the response is substantially linear for these motions.

However, the initial position of the test mass 104 may change over time, which changes the equilibrium position. For different equilibrium positions, the optomechanical coupling rates are different due to the exponential intensity distribution of the evanescent field around the resonator. Therefore, when the initial position of the test mass changes, the equilibrium position changes and consequently the scale factor of the sensor 100 is changed. Closed loop operation maintains the initial position and consequently the scale factor. This ensures linearity and accurate measurement. In particular, electrostatic actuation regulates the motion of the test mass and specifically tunes the separation gap, which tunes the optomechanical response.

Closed loop operation therefore enables the maintenance of a small gap between the microresonator and the test mass, for example, a gap smaller than a micron. This small gap is advantageous because positioning the test mass closer to the microresonator results in a larger scale factor of response, meaning there is a larger change in the outputted optical signal for the same amount of inertial force detected. Moreover, positioning the test mass close to the microresonator ensures optical readout can be performed, as the evanescent field around the microresonator only spans a small distance (on the order of the wavelength of the light).

The inertial sensor may be used to measure acceleration. Graph C 330 and graph D 340 illustrate the change in applied acceleration based on the deflection of the test mass.

To find acceleration measurements, the equilibrium position is determined as d1 or d2, which are different separation distances 'd' as illustrated in graph A 310 and graph B 320. The selection of the equilibrium position as d1 is illustrated in the graph C 330. The selection of the equilibrium position as d2 is illustrated in the graph D 340. The selection of the equilibrium position, for example, the choice between d1 and d2, defines the scale factor, which is discussed above. This is because at each equilibrium position the optomechanical dispersive coupling rate and optomechanical dissipative coupling rate is different, as shown in graphs A and B 310, 320, due to the exponential intensity distribution of the evanescent field around the resonator, and the scale factor is based on these coupling rates.

Small motions of the test mass 104 are then detected about the equilibrium, for example motions of +/-50nm from the equilibrium position as this is when the graph is still substantially linear. Thus, in order to operate the sensor 100, an equilibrium position may be selected, and small motions may be detected.

The inclusion of closed loop feedback enables higher acceleration to be detected with smaller motions because the electrostatic force produced by the feedback mechanism counteracts the deflection. For example, with closed loop feedback, 100g of acceleration may cause a 10nm deflection instead of a 50nm deflection as it would without closed loop feedback. As explained above, closed loop operation stabilises the sensor 100 at the equilibrium position so the sensor 100 does not have unwanted offsets and can be maintained over time.

Figure 4 shows an example flowchart 400. The flowchart illustrates a closed loop feedback system for use with the inertial sensor 100. The closed loop feedback system is implemented by the sensor 100 and a controller internal or external to the sensor 100, as mentioned previously in relation to Figure 1. When the test mass 104 is displaced due to an inertial force multiple times, the test mass may begin to respond non-linearly and may drift over time. The drift may be due to thermal changes to the test-mass and may be thermally induced, i.e. due to temperature changes of the inertial sensor. The drift may be due to asymmetrical fabrication or damping. The closed loop feedback system is suitable for reducing the drift of the test mass and to maintain the linearity of the response of the test mass over a wide magnitude of forces and to actively stabilise the test mass, thus reducing errors at the output of the sensor. In particular, the feedback is for continuously counteracting the test mass response in relation to drift, particularly to lower long-term drift. This means that closed loop operation is particularly important when inertial sensors are used for tracking position, where the inertial sensing is to continuously track measurements over time rather than providing a single shot measurement. The closed loop feedback system can also protect the test mass against shock.

In the flowchart 400 of Figure 4, the inertial sensor 100 receives an inertial force which may be due to the sensor itself being accelerated or rotated 402. As described above, the test mass 104 is deflected 404 by the inertial force. This is detected by the cavity optomechanical readout mechanism 406 (in the form of the microresonator 102, optical coupler 108 and detector 110) which receives a change in the outputted optical signal indicating a change in optical resonance characteristics of the microresonator 102 due to the test mass 104 deflection. Based on the change in optical resonance characteristics, the acceleration or rate of rotation is calculated and output 410. The calculation is performed by processing means in the detector 110 or the controller. The controller then applies closed loop feedback. The controller receives the change in the outputted optical signal 408 and actuates the test mass using electrostatic actuation 406 via the electrode 106 to reduce the drift of the test mass 104. Thus, closed loop feedback is applied to the test mass 104 by applying a voltage to an electrode 106 to generate an electrostatic force which moves the test mass 104 to change the distance between the test mass 104 and the microresonator 102.

The controller controls the voltage applied to the electrode and the electrostatic force is based on the applied voltage. The test mass may be grounded so that the voltage difference between the electrode and test mass is known. The electrostatic force moves the test-mass for fine positioning with respect to the microresonators, protection from shock and closed loop operation to reduce non-linearities and drift. Thus, closed loop operation keeps the sensors accurate for longer durations of continuous operation and is therefore advantageous for long term stability of the sensor.

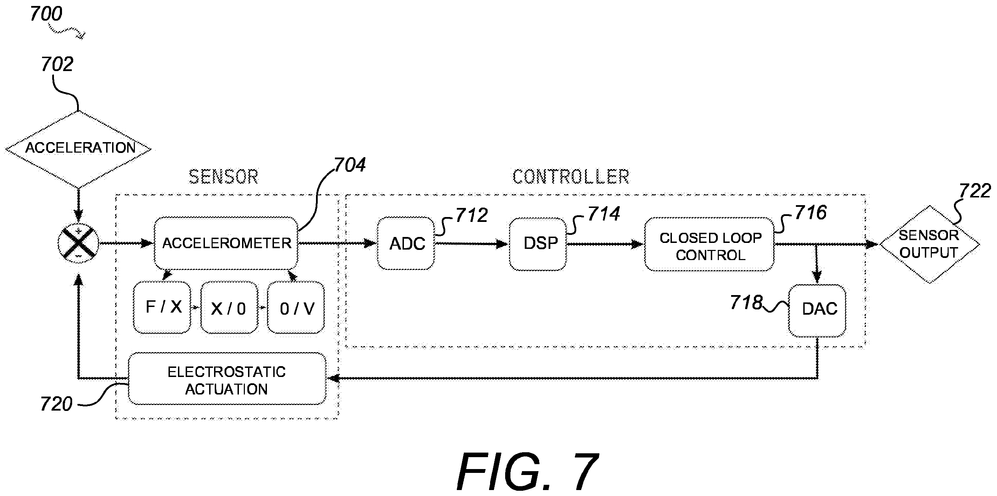

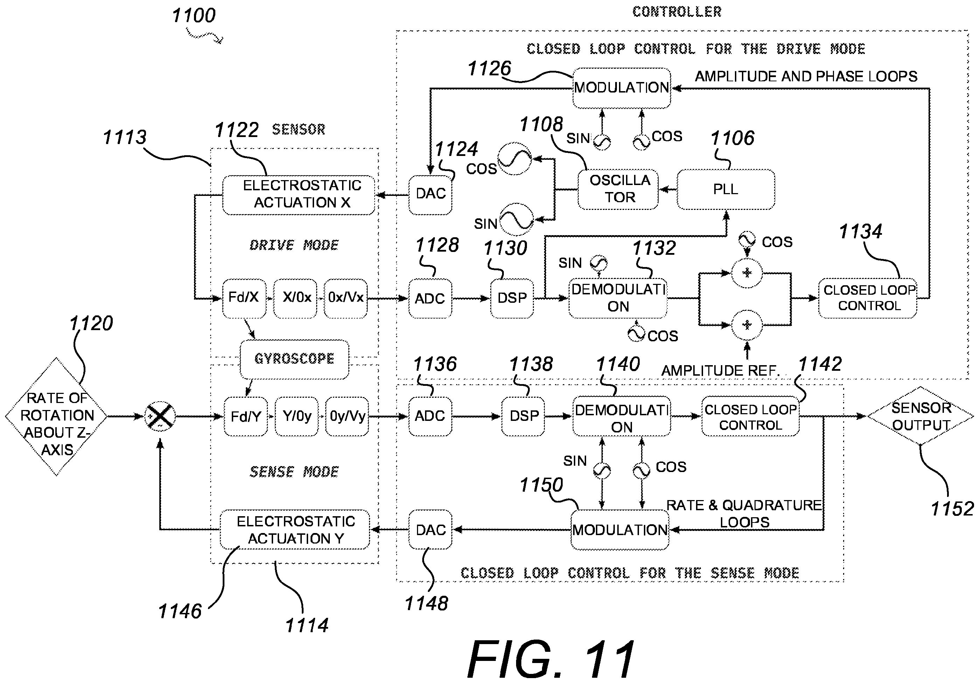

The controller may employ a proportional integral derivative (PID) control to determine the necessary feedback. The feedback bandwidth may be DC up to and beyond the fundamental mechanical frequency. When the inertial sensor 100 is an accelerometer, the feedback bandwidth may be significantly larger than the sensing bandwidth. When the inertial sensor is a gyroscope, the closed loop feedback may act at the driving frequency. Signal processing may be required before the controller processes the signal to determine the feedback and/or the acceleration or rate of rotation measurement. Example signal processing techniques are detailed in Figures 7 and 11. Besides performing the closed loop feedback, the controller may also perform a 'self-test' procedure on the sensor 100 by actuating the test mass 104 using the electrodes 106 by a predefined distance to enable in-situ calibration of the optical readout.

The inertial sensor 100 may be for detecting acceleration. When the test mass is suspended using a spring 114, acceleration can be determined using Hooke's law, where the size of the extension or compression of the spring is directly proportional to the force applied to the spring. When the inertial sensor 100 is accelerated, an inertial force is applied to the inertial sensor, deflecting the test mass 104 and perturbing the resonance of the microresonator 102. After finding the deflection from the resonance, Hooke's law is then used to find the force and consequently acceleration of the sensor 100.

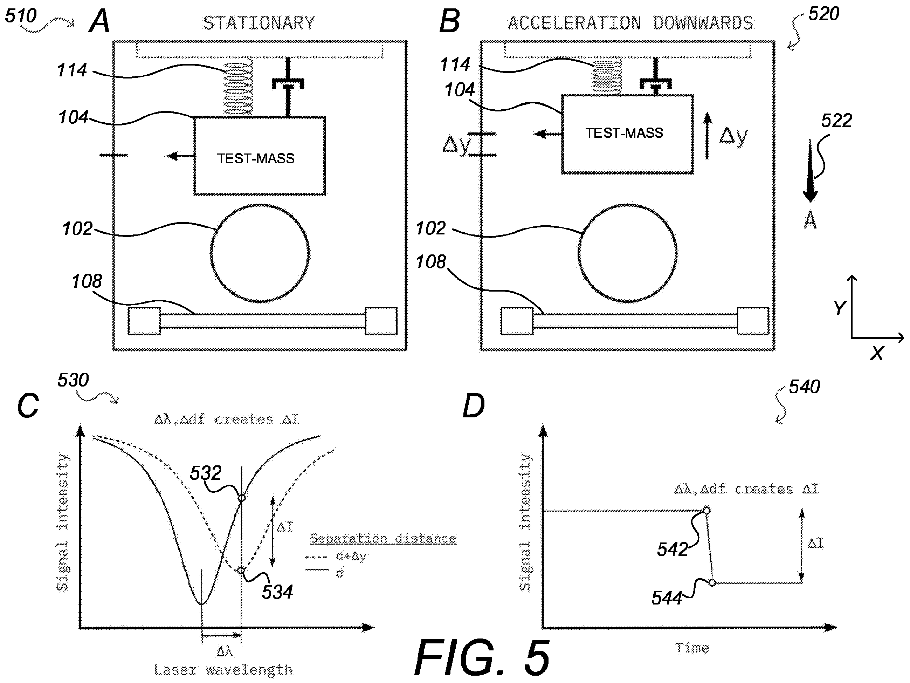

Figure 5 shows a diagram of an optomechanical element and example outputs of the example inertial sensor 100 before and during acceleration. In the following Figure, upwards is used to refer to moving along the Y axis in increasing values of Y and downwards is used to refer to moving along the Y axis in decreasing values of Y, the Y axis being indicated in the Figure. Whilst in Image B 520 the acceleration is shown as being downwards from the test mass towards the microresonator, the inertial sensor 100 is not limited to only detecting downward acceleration. The inertial sensor 100 may detect acceleration upwards and downwards. The inertial sensor 100 may detect acceleration in the X and Y plane, or in the X, Y and Z plane.

Image A 510 shows the optomechanical element when there is no acceleration, i.e. when the sensor is stationary or at a constant velocity. Image B 520 shows the optomechanical element when there is acceleration downwards from the test mass 104 towards the microresonator 102, as illustrated by the arrow 522. As shown in Image B 520, when there is acceleration downwards towards the microresonator 102, the test mass is displaced upwards away from the microresonator by $\Delta y$. This is caused by an upwards inertial force on the test mass resulting from the downwards acceleration. The difference in distance between the microresonator and test mass when the sensor 100 is not accelerating and when the sensor 100 is accelerating downwards is therefore $\Delta y$.

For graphs C 530 and D 540, the solid line represents when the inertial sensor 100 is not accelerating and the dashed line represents when the inertial sensor 100 is accelerating downwards. Due to the displacement $\Delta y$ of the test mass when the sensor 100 is accelerating downwards, there is a shift $\Delta \lambda$ in the resonant wavelength of the microresonator. The graph C 530 illustrates the signal intensity at different wavelengths at the output of the optical coupler. This graph shows a shift in the minimum signal intensity from the solid line (when the sensor is not accelerating) to the dashed line (when the sensor is accelerating downwards). This shift is due to the shift $\Delta \lambda$ in the resonant wavelength of the microresonator from when the sensor is not accelerating to when there is downwards acceleration. The shift in the resonant wavelength of the microresonator is also demonstrated through the difference in intensity at a given wavelength of the signals provided by the sensor when it is not accelerating and when it is accelerating downwards. The different intensity of the signals at a given wavelength is illustrated by the points marked as 532 and 534 in graph C 530. At this wavelength, there is a shift $\Delta I$ in the signal intensity from when the sensor 100 is not accelerating to when it is accelerating downwards. The shift $\Delta I$ is from the point marked as 532, when the sensor 100 is not accelerating, to the point marked as 534, when the sensor 100 is accelerating downwards. This is because, when the sensor 100 is not accelerating, the given wavelength is not the resonant wavelength and so the signal intensity is not a minimum signal intensity and, when the sensor 100 is accelerating downwards, the given wavelength is the resonant wavelength, so the signal intensity is a minimum signal intensity. Graph C also illustrates the line broadening that may occur when then sensor is accelerated. Such broadening may result in the increase in the minimum signal intensity, as shown in Graph C.

Graph D 540 illustrates the signal intensity over time at the same given wavelength as graph C, where point 542 corresponds to point 532 and point 544 corresponds to point 534. Graph D shows the reduction in signal intensity, labelled as the shift $\Delta I$, at the given wavelength from the time at which the sensor 100 is not accelerating to the time at which there is downwards acceleration of the sensor 100. As explained in relation to graph C 530, this reduction in signal intensity is due to the given wavelength not being the resonant wavelength when the sensor 100 is not accelerating and being the resonant wavelength when the sensor 100 is accelerating downwards due to the displacement of the test mass away from the microresonator.

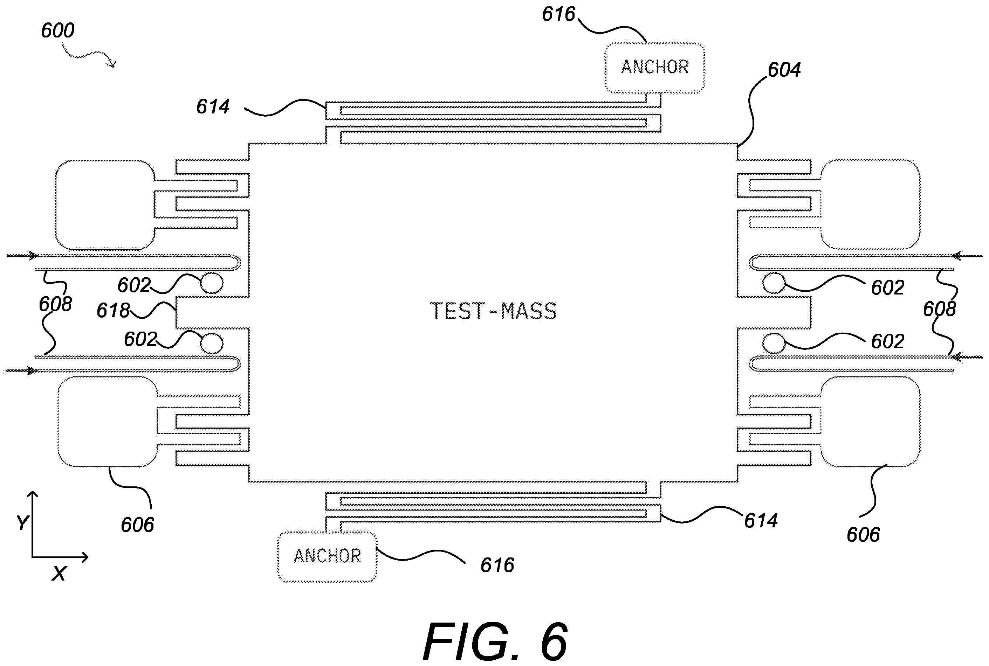

Figure 6 shows a diagram of an example inertial sensor 600 for measuring acceleration. The inertial sensor 600 may also be referred to as an accelerometer. The inertial sensor 600 is an example implementation of the inertial sensor 100 of Figure 1. The sensor operates using Hooke's law as explained in relation to Figure 5. As illustrated in Figure 6, the inertial sensor 600 comprises a micro-electro-mechanical inertial test mass 604. The test mass 604 is suspended by means of two suspension means 614, which in this example are flexible parts of the test mass 604, connected to respective anchors 616. These flexible parts of the test mass may behave as springs. The test mass 604 is deflectable under the application of an inertial force caused by acceleration of the inertial sensor 600. The anchors 616 are fixed relative to the sensor 600. The inertial sensor 600 also comprises four microresonators 602. The test mass 604 is suspended adjacent to and non-contiguous with the four microresonators 602. The test mass includes two protrusions 618, each protrusion located between two microresonators 602. Each protrusion 618 may act as an optical channel to guide photons that have escaped from the microresonators 602 either side of the protrusion 618.

The inertial sensor 600 further comprises four electrodes 606 for counteracting a deflection of the test mass 604 with an electrostatic force. The electrodes 606 are located on opposite sides of the test mass 604 so that the electrostatic force can be applied to either side to precisely control the movement or maintenance of position of the test mass 604. Each of the four electrodes 606 comprise two fingers. Fingers are protrusions and these terms are used interchangeably throughout the description. Both the electrodes 606 and the fingers are fixed and stationary relative to the sensor 600. The test mass 604 also comprises fingers that are located between the stationary electrode fingers. The fingers of the test mass 604 are movable as they also deflect under the application of the inertial force. The movable test mass fingers are located between the stationary electrode fingers in an interdigitated form. The motion of each movable test mass finger is strongly coupled to the motion of the test mass such that a movement of the finger results in a movement of the test mass as a whole. Thus, the stationary electrode fingers counteract a deflection of the test mass 604 with an electrostatic force by counteracting the deflection of the movable test mass fingers. This enables precise control of the test mass 604 and fine positioning of the test mass 604 with respect to the microresonators 602 as the fingers of the electrodes 606 may each provide a small amount of force to each test mass finger. The stationary electrode fingers may counteract the deflection of the test mass in the X direction and/or the Y direction. The stationary electrode fingers may also counteract the deflection of the test mass in the Z direction (not shown).

The inertial sensor 600 further comprises four optical couplers 608 for coupling light into and out of a corresponding microresonator 602. The inertial sensor 600 further comprises one or more detectors (not shown in Figure 6). Light enters each optical coupler 608 at the arrow, as illustrated in Figure 6, is input into and output from the corresponding microresonator 602 and is then output from the optical coupler 608 to the detector.

As the test mass 604 moves up and down along the Y axis, there is a change in spacing between the test mass 604 and each of the microresonators 602. Due to the placement of the microresonators 602, the movement of the test mass 604 will change the spacing between the test mass 604 and the four microresonators 602 in a differential way. The change in spacing between the test mass 604 and each of the microresonators 602 causes a change in the optical resonance characteristics of that microresonator 602. Due to the different changes in spacing for each microresonator 602, there will be a differential change in the light output from each of the optical couplers 608. By comparing the different changes in the light output from each optical coupler 608, a differential output is determined. Such a differential output removes the errors that occur at all the microresonators as it focuses on the differential. The arrangement of the inertial sensor 600 of Figure 6 therefore allows for differential operation which significantly improves readout by reducing drift and temperature offsets.

Whilst the inertial sensor 600 comprises a specific number of components arranged in a particular way, other numbers of components and arrangements would also provide an effective inertial sensor. Differential measurements that provide the above advantages may be performed as long as there is at least one microresonator on each of two opposite sides of the test mass. The microresonators 602 may all have substantially the same optical resonance or each of the microresonators 602 may have a different optical resonance.

Whilst Figure 6 shows the electrostatic actuation being performed by interdigitated electrodes arranged in particular positions around the test mass, the electrostatic actuation can be arranged in any way which would produce a force on the test mass in the X and/or Y directions.

Figure 7 illustrates a control loop feedback system 700 for use when the inertial sensor 100 or inertial sensor 600 is for detecting acceleration. This control loop feedback system 700 is an example of the feedback system 400 of Figure 4. The closed loop feedback system 700 is implemented by the sensor 100 or sensor 600 and a controller internal or external to the sensor, as mentioned previously in relation to Figure 1.

A force is exerted on the sensor due to acceleration and the sensor outputs an output voltage V 710. The voltage output from the sensor is input into the controller. This voltage is then converted into a digital signal by an analog to digital converter (ADC) 712 and filtered by a digital signal processor (DSP) 714 within the controller. The filtering may be high pass or low pass filtering. The amount of acceleration can then be determined by closed loop control 716 within the controller using the filtered signal and is provided as the sensor output 722. The closed loop control 716 within the controller also provides feedback to the sensor. To do this, the closed loop control 716 determines the non-linearities, drift and noise and outputs a voltage signal to the electrodes to reduce the effect of these. The voltage signal is generated by a digital to analog converter (DAC) 718 and is then provided to the electrodes of the sensor. The electrodes output an electrostatic force based on the size of the voltage signal that actuates the test mass. The actuation is essentially negative feedback because the actuation of the test mass by the electrodes is to remove the noise and drift contributions to the measurement of the sensor. The control loop feedback system 700 is a continuous system to continually reduce drift and noise of the sensor and provide an accurate and precise output measurement of acceleration.

The inertial sensor may be for sensing a rate of rotation. Rate of rotation is sensed using the Coriolis effect on a vibrating gyroscope structure. To measure rate of rotation, the test mass is driven in a first direction, for example along the X axis, at a frequency $\Omega$. Due to the Coriolis effect, rotation about the Z axis causes a displacement along the Y axis at the frequency Ω. The rate of rotation can then be determined by finding the change in amplitude of the oscillation in the Y axis at the frequency Ω.

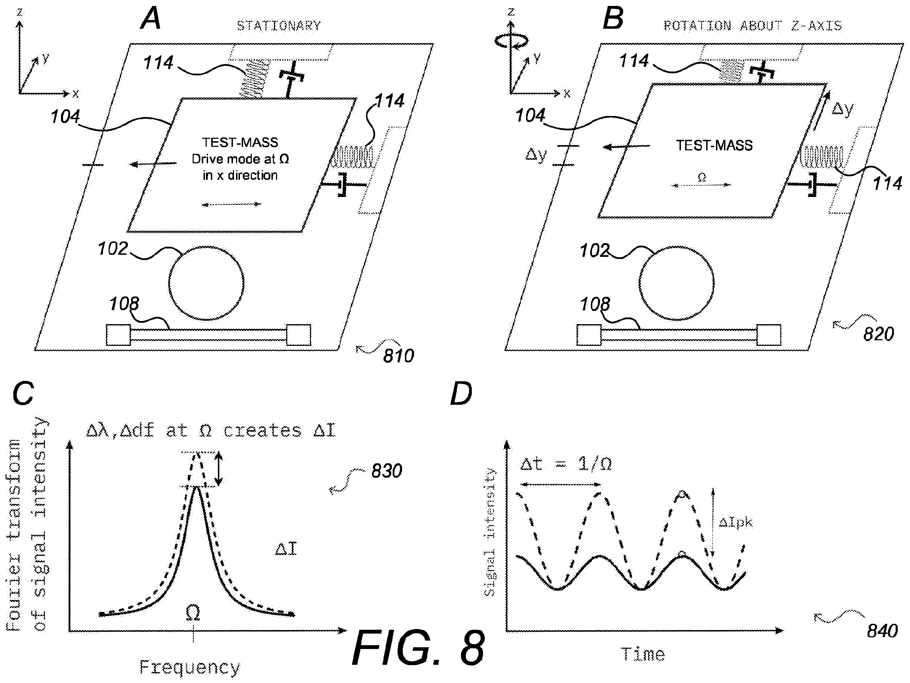

Figure 8 illustrates the optomechanical element and example outputs of the example inertial sensor 100 before and during rotation. As mentioned above, when the inertial sensor 100 is for measuring rate of rotation, the test mass is driven in the X direction to vibrate at a frequency Ω. Image A 810 shows the optomechanical element when the sensor 100 is not rotating, for example, when the sensor 100 is stationary, and Image B 820 shows the optomechanical element when the sensor 100 is rotated about the Z axis. It is to be understood that the directions X, Y and Z are provided for understanding and the sensor is not limited to being utilised only for measuring rate of rotation about the Z axis.

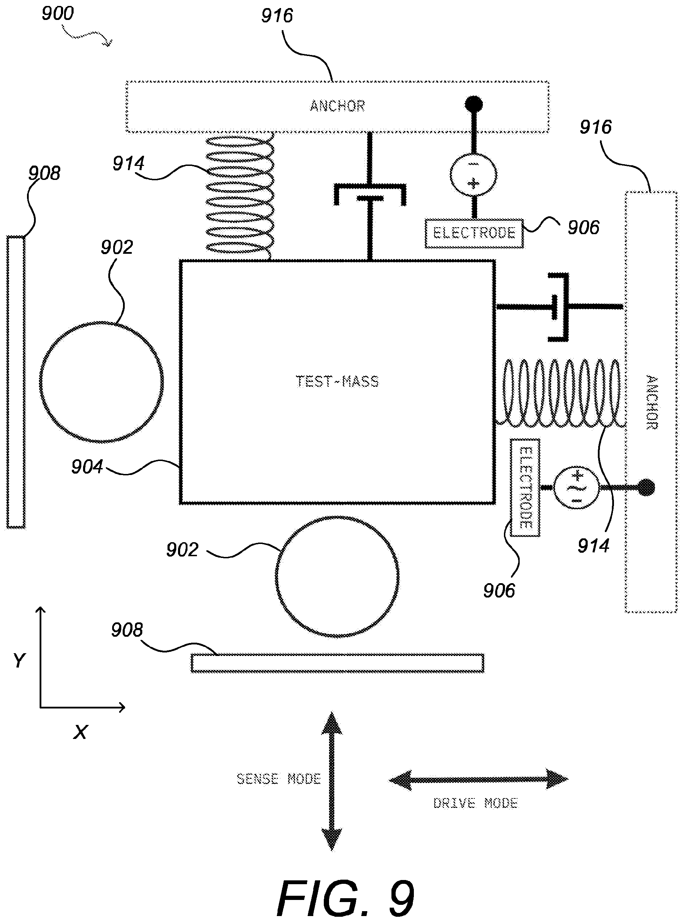

As illustrated in Images A 810 and B 820, the inertial sensor for detecting rate of rotation comprises two suspension means, which in this example are springs, positioned substantially perpendicular to each other to allow for motion in two perpendicular directions and this will be further explained in relation to Figure 9. As shown in image B 820, when there is rotation about the Z axis, the test mass is displaced along the Y axis at the frequency Ω by Δy. The difference between the distance 'd' when the sensor 100 is not rotating and when the sensor 100 is rotating about the Z axis is therefore Δy.

For graphs C 830 and D 840, the solid line represents when the inertial sensor 100 is not rotating and the dashed line represents when the inertial sensor 100 is rotating about the Z axis. Graph C 830 illustrates the Fast Fourier Transform (FFT) of the signal at the output of the optical coupler and shows the maximum amplitude is at the frequency Ω as the test mass 104 is driven along the X axis at this frequency. Graph C 830 also illustrates a change in amplitude of the signal $\Delta I$ at the frequency Ω from when the sensor is not rotating to when the sensor is rotated about the Z axis.

Upon rotation, the Coriolis force leads to an amplitude modulated vibration in the Y axis at the frequency Ω. This is shown in graph C 830 by the increase $\Delta I$ in the amplitude of the signal at the frequency Ω from when the sensor is stationary to when it is rotating. By finding the change in amplitude $\Delta I$ of the signal, the Coriolis force can be found using known equations and, from this, the rate of rotation can be determined.

Graph D 840 illustrates the signal intensity of the output from the optical coupler 108 over time. As the test mass 104 is driven along the X axis at the frequency Ω, a small portion of this signal is detected in the Y axis, as shown in graph D 840, which also has a frequency of Ω. Graph D 840 also shows the increase in amplitude of the frequency as explained above in relation to graph C 830. In particular, the difference $\Delta I_{pk}$ between the peak amplitudes of the non-rotating sensor and rotating sensor are clearly shown in graph D 840.

The change in distance between the microresonator and the test mass causes a change in resonant frequency characteristics of the microresonator which changes the transmission output from the optical coupler at the detector. From the change in transmission at the detector, the change in resonant frequency can be detected, as explained in relation to Figure 2. As the change in resonant frequency is based on the displacement of the test mass, the change in amplitude of the signal at the frequency Ω can be determined and so the Coriolis force can be determined and consequently the rate of rotation can be measured.

Figure 9 shows a diagram of an example inertial sensor 900 for measuring rate of rotation. The inertial sensor 900 may also be referred to as a gyroscope. The inertial sensor 900 is a type of vibratory gyroscope. The inertial sensor 900 is an example implementation of the inertial sensor 100 of Figure 1. As illustrated in Figure 9, the inertial sensor 900 comprises a micro-electro-mechanical inertial test mass 904. The test mass 904 is suspended by means of two suspension means, which in this example are springs 914, connected to respective anchors 916. The anchors 916 are fixed relative to the sensor. The springs 914 are positioned substantially perpendicular to each other to allow for motion in two perpendicular directions. This enables the test mass to move in two degrees of freedom, perpendicular to one another. The movement in two degrees of freedom is needed to ensure the sensor can operate in a sensing mode and a drive mode, as explained below. The sensor operates as explained in relation to Figure 8, meaning it also detects rotation about the Z axis. However, it is to be understood that the directions X, Y and Z are provided for understanding and the sensor is not limited to being utilised only for measuring rate of rotation about the Z axis.

The test mass 904 is deflectable along the X axis and the Y axis. The inertial sensor 900 also comprises two microresonators 902. The test mass 904 is suspended adjacent to and non-contiguous with the two microresonators 902. The inertial sensor 900 further comprises two optical couplers 908 for coupling light into and out of a corresponding microresonator 902. The inertial sensor 900 further comprises one or more detectors (not shown in Figure 9). Light is input into the optical coupler and, from the optical coupler, the light is input into a corresponding microresonator 902. The light is then output from the microresonator 902 back to the optical coupler 908 which outputs light to the detector.

The inertial sensor 900 further comprises two electrodes 906 for counteracting a deflection of the test mass 904 with an electrostatic force. The electrodes 906 are located on perpendicular sides of the test mass 904 so that the test mass can be controlled along both the X axis and Y axis. The inertial sensor 900 has a sensing mode and a driving mode that are performed simultaneously. Thus, conceptually, the inertial sensor 900 may be equated to two inertial sensors 100 of Figure 1 perpendicular to each other and with a common test mass, where the main purpose of the inertial sensor running along the X axis is for driving and the main purpose of the other inertial sensor running along the Y axis is for sensing.

A first of each of the anchor 916, spring 914, electrode 906, microresonator 902 and optical coupler 908 are used for the driving mode and a second of each of the anchor 916, spring 904, electrode 906, microresonator 902 and optical coupler 908 are used for the sensing mode. As shown in Figure 9, the driving mode is along the X axis where the electrode 906 on the right of the test mass is for driving the test mass to vibrate at the frequency $\Omega$ and the spring 914 and anchor 916 to the right of the test mass in the Figure enable freedom of movement of the test mass 904 in the X direction to enable such vibration. The optical coupler 908 and microresonator 902 on the left of the test mass are for sensing that the test mass is being driven at the correct frequency. The electrode 906 on the right of the test mass may also be for reducing noise and drift, as explained in relation to Figure 4.

The sensing mode is along the Y axis with the spring 914 and anchor 916 above the test mass enabling freedom of movement of the test mass 904 in the Y direction. As explained in relation to Figure 8, when the test mass is driven at a frequency $\Omega$ in the X direction, the test mass is displaced along the Y axis by rotation about the Z axis due to the Coriolis effect. When the test mass is displaced along the Y axis by $\Delta y$, the electrode 906 on the top of the test mass is for actuating the test mass along the Y axis to reduce drift and noise as explained in relation to Figure 4.

The displacement of the test mass along the Y axis changes the spacing between the test mass 904 and the microresonator 902 below the test mass 904. This causes a change in optical resonance characteristics of the microresonator 902 below the test mass 904 and consequently a change in the transmission output detected from the optical coupler 908 below the microresonator by a detector (not shown in Figure 9). Rate of rotation can be calculated using the transmission output from the optical coupler as explained in relation to Figure 8.

Whilst the inertial sensor 900 comprises a specific number of components arranged in a particular way, other numbers of components and arrangements would also provide an effective inertial sensor for measuring rate of rotation. The sensor may instead be for measuring rate of rotation about the Y axis or X axis. The sensor may be for measuring rate of rotation about more than one axis.

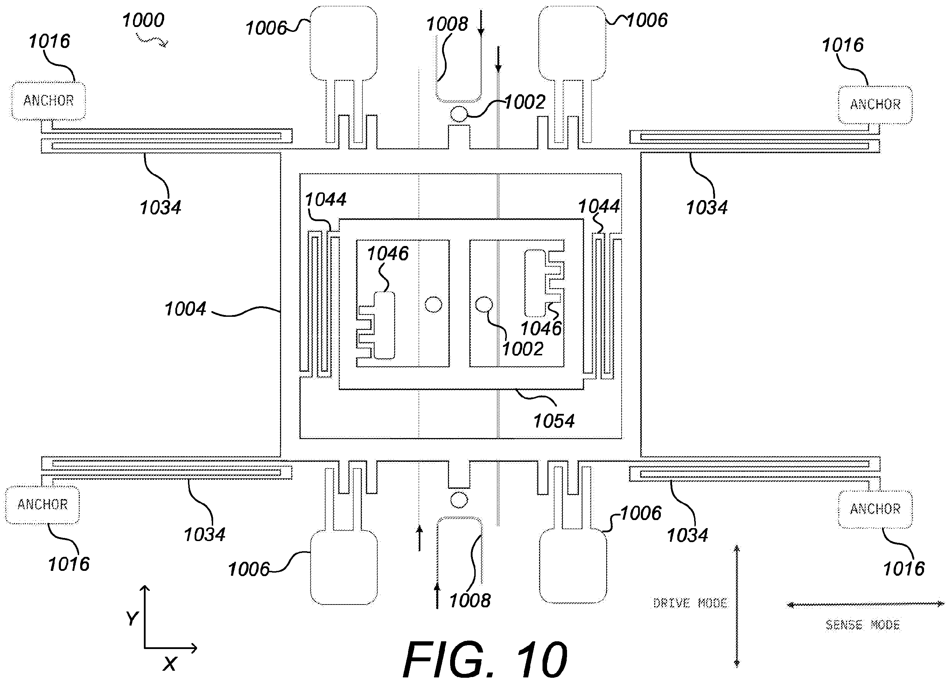

Figure 10 shows a diagram of another example inertial sensor 1000 for measuring rate of rotation, which may also be referred to as a gyroscope. The inertial sensor 1000 is a type of vibratory gyroscope. The inertial sensor 1000 is an example implementation of the inertial sensor 900 of Figure 9. As illustrated in Figure 10, the inertial sensor 1000 comprises an outer micro-electro-mechanical inertial test mass which acts like a frame 1004 and an inner micro-electro-mechanical inertial test mass 1054. The outer test mass frame 1004 is suspended by means of four suspension means 1034, which in this example are flexible parts of the outer test mass frame 1004, connected to respective anchors 1016. The anchors 1016 are fixed relative to the sensor. These flexible parts of the outer test mass frame 1004 may behave as springs. The suspension means 1034 have high stiffness in the X direction but are bendable in the Y direction. Therefore, the outer test mass frame 1004 is constrained to moving in the Y direction. The inner test mass 1054 is suspended by means of two suspension means 1044, which in this example are flexible parts of the inner test mass 1054, connected from the outer sides of the inner test mass 1054 to the inner sides of the outer test mass frame 1004. These flexible parts of the inner test mass 1054 may behave as springs. The suspension means 1044 have high stiffness in the Y direction but are bendable in the X direction. Therefore, the inner test mass 1054 is constrained from moving with respect to the outer test mass frame 1004 in the Y direction and so moves with the outer test mass frame 1004 in the Y direction. The inner test mass 1054 can move with respect to the outer test mass frame 1004 in the X direction. Thus, due to the stiffness of the suspension means 1034 of the outer test mass frame 1004 in the X direction, only the inner test mass, 1054 experiences the X-axis Coriolis force created when under the application of rotation.

The inertial sensor 1000 also comprises four microresonators 1002. The inner test mass 1054 is suspended adjacent to and non-contiguous with two of the microresonators 1002 and the outer test mass frame 1004 is suspended adjacent to and non-contiguous with the other two microresonators 1002. The inertial sensor 1000 further comprises four optical couplers 1008 for coupling light into and out of a corresponding microresonator 1002. The inertial sensor 1000 may further comprise one or more detectors (not shown in Figure 10). Light enters the optical couplers as shown by the arrows illustrated in Figure 10, is input into and output from the corresponding microresonator and is then output to the detector.

The inertial sensor 1000 further comprises four electrodes 1006 for counteracting a deflection of the outer test mass frame 1004 in the Y direction with an electrostatic force. There are two electrodes 1006 above the outer test mass frame 1004 and two below the outer test mass frame 1004 so that the electrostatic force can be applied to opposite sides of the outer test mass frame 1004 to precisely control the movement or maintenance of position of the outer test mass frame 1004. The inertial sensor 1000 further comprises two electrodes 1046 for counteracting a deflection of the inner test mass 1054 in the X direction with an electrostatic force. Each of the six electrodes 1006, 1046 comprise two fingers and are interdigitated, as described in more detail in relation to Figure 6.

The inertial sensor 1000 has a sensing mode and a driving mode that are performed simultaneously, as explained above in relation to Figure 9. As shown in Figure 10, the driving mode is along the Y axis and the sensing mode is along the X axis. The orientation of the suspension means 1044, 1034 constrains the direction of travel of the inner test mass 1054 and outer test mass frame 1004, as described above, so the drive mode doesn't cross couple to the sensing mode, and the Coriolis effect doesn't in turn, couple to the drive mode.

Regarding the driving mode, the four electrodes 1006 at the top and bottom of the outer test mass frame 1004 are for driving the frame 1004 to vibrate at the frequency $\Omega$. The suspension means 1044 connecting the outer test mass frame 1004 and inner test mass 1054 are stiff in the Y direction and therefore pass the vibration from the outer test mass frame 1004 to the inner test mass 1054. The vibrational energy is therefore translated from the outer test mass frame 1004 to the inner test mass 1054 such that the inner test mass experiences the Coriolis effect. The microresonators 1002 either side of the protrusions at the top and bottom of the outer test mass frame 1004 and their corresponding optical coupler 1008 are for sensing that the test mass frame 1004 is being driven at the correct frequency.

Regarding the sensing mode, the suspension means 1044 at the left and right side of the inner test mass 1054 enabling freedom of movement in the X direction. The inner test mass 1054 is displaced in the X direction by rotation about the Z axis. When the test mass 1054 is displaced along the X axis by $\Delta x$, the electrodes 1046 inside the inner test mass 1054 actuate the inner test mass 1054 along the X axis to reduce drift and noise as explained in relation to Figure 4.

When the outer test mass frame 1004 is being driven at a frequency $\Omega$ in the Y direction, the vibrational energy is transferred to the inner test mass 1054 which is constrained to move in the X axis due to the suspension geometry. When the sensor 1000 is rotated, the inner test mass 1054 deflects along the X axis at the frequency $\Omega$ due to the Coriolis effect. The rate of rotation can then be detected using the microresonators 1002 to the left and right of the central column of the inner test mass in the same manner as explained in relation to Figures 8 and 9.

Whilst Figure 10 shows the electrostatic actuation being performed by interdigitated electrodes arranged in particular positions around the test mass, the electrostatic actuation can be arranged in any way which would produce a force on the test mass in the X and Y directions.

The arrangement shown in Figure 10 provides the advantage of decreasing cross-axis coupling of the vibrations in the sense and drive direction because it uses two frames where the springs can be tuned to be very stiff in either the drive or sense direction.

Whilst Figure 10 shows the sensor 1000 having an inner test mass 1054 and an outer test mass frame 1004, the sensor can have a single test mass and can be designed in other ways such as a disk-type hemispherical system or a tuning fork structure.

Whilst Figure 10 shows particular numbers of each component, the sensor can have any number of optical couplers, microresonators, test masses and electrodes and can provide acceleration & rate of rotation measurements in any single or plurality of axes.

Figure 11 illustrates a control loop feedback system 1100 for use when the inertial sensor 900 of Figure 9 or inertial sensor 1000 of Figure 10 is for detecting rate of rotation. This control loop feedback system 1100 is an example of the feedback system 400 of Figure 4. The closed loop feedback system 1100 is implemented by the inertial sensor and a controller internal or external to the sensor.

When the sensor is rotated about its Z axis 1120, the sensor is in both sensing mode 1114 and drive mode 1113. The controller performing the closed loop feedback has separate closed loop controls for the drive mode and the sensing mode. The closed loop control 1116 for the drive mode is to keep the amplitude stable using closed loop feedback to adjust the electrostatic force 1122 by comparing and regulating the drive mode oscillation amplitude to a given reference setpoint. The closed loop control 1118 for the sensing mode is to monitor the sensor output and to look for changes in amplitude at the frequency $\Omega$ and to counteract such changes using electrostatic actuation 1146.

In the drive mode 1113, the test mass is driven at the frequency $\Omega$ in the X direction using electrostatic actuation 1112. A driving force is exerted on the sensor in the X direction and the sensor outputs an output voltage V. The output voltage of the sensor is input into the controller for closed loop control for the drive mode. The output voltage is input into an ADC 1128 within the controller to convert the voltage into a digital signal and is filtered using a DSP 1130. The signal is then demodulated 1132 to obtain a drive mode oscillation amplitude that can be compared to the given reference point. In particular, the demodulated signal is used to extract information about the offsets to the amplitude of vibration and frequency of vibration, which can then be corrected by feedback from the closed loop control. The closed loop control 1134 compares the drive mode oscillation amplitude to the given reference setpoint and determines the necessary actuation of the sensor to maintain stability. The closed loop control 1134 sends a drive signal via a modulator 1126 and a DAC 1124 to the relevant electrodes of the sensor for electrostatic actuation 1122 in the X axis. There is also a phase locked loop (PLL) 1106 connected to a digitally controlled oscillator 1108 that keeps the frequency locked and generates frequency references used in other parts of the system. To increase the sensitivity of the sensor to rate of rotation, it is important the driving force is very accurate and produces vibrations with a stable peak amplitude and frequency.

In the sensing mode 1114, the rotation of the sensor about the Z axis 1120 causes a force to be exerted on the test mass along the Y axis. The sensor outputs an output voltage V. The output voltage of the sensor is input into the controller for closed loop control for the sensing mode. The output voltage is input into an ADC 1136 to convert the voltage into a digital signal and is filtered using a DSP 1138. The signal is then demodulated 1140 to obtain the in-phase rate that represent the Coriolis amplitude that is proportional to the rotation rate and occurs in response to a rate of rotation. The demodulator 1140 also outputs a quadrature signal that represents the error relating to frequency mismatch. The closed loop control 1142 then determines and output 1152 the rate of rotation using the in-phase rate. The closed loop control 11152 also outputs a correction signal in order to suppress the quadrature signal and the in-phase rate. The correction signal is modulated 1150 and converted to a voltage signal through a DAC 1148 to the relevant electrodes of the sensor for electrostatic actuation in the Y axis 1146.

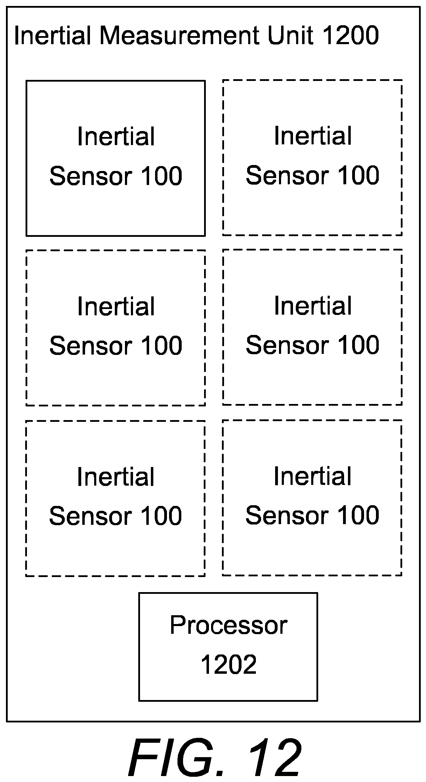

Figure 12 shows a block diagram of an example inertial measurement unit (IMU) 1200. The IMU 1200 comprises at least one inertial sensor 100 and a processor 1202. Figure 12 illustrates six inertial sensors 100, with five of the inertial sensors 100 in dashed lines, indicating they are optional. Whilst six sensors 100 are shown in the IMU 1200, the inertial measurement unit 1200 may comprise more or fewer inertial sensors. The processor may perform the operations of any controller described herein. Whilst the inertial sensor 100 of Figure 1 is shown as being included in the IMU, the IMU may include any of the inertial sensors described herein. The IMU may comprise inertial sensor 600 of Figure 6 inertial sensor 900 of Figure 9 and/or inertial sensor 1000 of Figure 10.

The processor 1202 is configured to, for each inertial sensor 100, receive an electrical signal from the one or more detectors 110, detect a change in the optical resonance characteristics of the one or more microresonators 102 in response to a change in the spacing between the test mass 104 and the microresonator 102, determine the acceleration and/or rate of rotation of the inertial sensor 100 based on the change in optical resonance characteristics of the one or more microresonators 102 and control the electrostatic force of the one or more electrodes 106 based on the change in optical resonance characteristics of the one or more microresonators 102. The control of the electrostatic force of an electrode 106 of the one or more electrodes may be based on the change in the optical resonance characteristics of a corresponding microresonator 102. The processor 1202 may be further configured to calibrate each inertial sensor 100 by changing the electrostatic force of each electrode 106 and detecting a change in the optical resonance characteristics of each microresonator 102.

The IMU 1200 may comprise six inertial sensors, as shown in Figure 12. The six inertial sensors comprise three inertial sensors 100 for the detection of acceleration and three inertial sensors 100 for the detection of rate of rotation. The three inertial sensors 100 for the detection of acceleration are each arranged to detect a different axis and the three inertial sensors 100 for the detection of rate of rotation are each arranged to detect a different axis. For example, the three inertial sensors 100 for detecting acceleration may comprise a sensor 100 for detecting acceleration in the X axis, a sensor 100 for detecting acceleration in the Y axis and a sensor 100 for detecting acceleration in the Z axis. The three inertial sensors 100 for detecting rate of rotation may comprise a sensor 100 for detecting rate of rotation about the X axis, a sensor 100 for detecting rate of rotation about the Y axis and a sensor 100 for detecting rate of rotation about the Z axis. This enables the provision of 6 degrees of freedom for 3D trajectory tracking. The processor 1202 calculates the total acceleration and/or rate of rotation of the inertial measurement unit 1200 based on the acceleration and/or rate of rotation of each inertial sensor 100.

Whilst the IMU in this example comprises three inertial sensors for detecting acceleration and three inertial sensors for detecting rate of rotation 100, any number of inertial sensors 100 for detection of acceleration and any number of inertial sensors 100 for detection of rate of rotation may be included in the IMU 1200.

Many variations of the methods described herein will be apparent to the skilled person.

Each feature disclosed in this specification (including any accompanying claims, abstract and drawings), may be replaced by alternative features serving the same, equivalent or similar purpose, unless expressly stated otherwise.

## Claims

1. An inertial sensor, the inertial sensor comprising:

   one or more microresonators (102, 602), each microresonator supporting a corresponding optical resonance;
   a micro-electro-mechanical inertial test mass (104, 604) suspended adjacent to and non-contiguous with the one or more microresonators, the test mass being thicker than each microresonator and being deflectable under the application of an inertial force;
   one or more electrodes (106, 606) for counteracting a deflection of the test mass with an electrostatic force;
   one or more optical couplers (108, 608) for coupling light into and out of a corresponding microresonator; and
   one or more detectors (110) for detecting light received from the one or more microresonators by the one or more optical couplers;
   wherein a change in a spacing between the test mass and at least one microresonator causes a change in the optical resonance characteristics of that microresonator.

2. An inertial sensor according to claim 1, the test mass having an average thickness of more than a micron, and/or the test mass having an average thickness in the order of tens or hundreds of microns.

3. An inertial sensor according to any preceding claim, wherein the distance between the test mass and each of the one or more microresonators is equal to or less than 1 micron.
   3. An inertial sensor according to any preceding claim,

   wherein the inertial sensor comprises at least two microresonators, at least two optical couplers, and at least two detectors, and
   wherein a change in a first spacing between the test mass and a first of the two microresonators and a change in a second spacing between the test mass and a second of the two microresonators causes a differential change in the optical resonance characteristics of the two microresonators

4. An inertial sensor according to any preceding claim, wherein the test mass is suspended between a first microresonator and a second microresonator, and/or
   wherein the test mass includes at least one protrusion, the first protrusion located between a first microresonator and a second microresonator and further protrusions each located between two microresonators

5. An inertial sensor according to any preceding claim, wherein at least two of the electrodes each include a finger that is stationary with respect to the sensor and wherein the test mass includes a finger that is movable with respect to the inertial sensor, the movable finger of the test mass located between the stationary fingers of the at least two electrodes such that the fingers of the test mass and at least two electrodes are interdigitated.

6. An inertial sensor according to any preceding claim, wherein the one or more microresonators are radially separated from the test mass; and/or
   the one or more electrodes and/or the one or more microresonators are fixed relative to the inertial sensor.

7. An inertial sensor according to any preceding claim, wherein the inertial sensor is for detecting acceleration or rate of rotation.

8. An inertial sensor according to any preceding claim, wherein the one or more microresonators are whispering gallery mode resonators and/or the test mass is larger than each of the one or more microresonators.

9. An inertial sensor according to any preceding claim, wherein the one or more electrodes are used to control the long-term stability properties of the inertial sensor.

10. An inertial sensor according to any preceding claim, further comprising a light source for transmitting light into each of the one or more optical couplers, wherein the light transmitted into each of the one or more optical couplers is broadband light or coherent single frequency light.

11. An inertial sensor according to any preceding claim, wherein the change in the optical resonance characteristics is a shift in the optical resonance and/or a broadening of the optical resonance, and/or
    the one or more microresonators each have a different optical resonance.

12. An inertial measurement unit comprising one or more inertial sensors according to any of claims 1 to 11 and a processor, the processor configured to, for each inertial sensor:

    receive an electrical signal from the one or more detectors;
    detect a change in the optical resonance characteristics of the one or more microresonators in response to a change in the spacing between the test mass and the one or more microresonators;
    determine the acceleration and/or rate of rotation of the inertial sensor based on the change in optical resonance characteristics of the one or more microresonators; and
    control the electrostatic force of the one or more electrodes based on the change in optical resonance characteristics of the one or more microresonators.

13. An inertial measurement unit according to claim 12, wherein the inertial measurement unit comprises six inertial sensors according to any of claims 1 to 11, the six inertial sensors comprising a first inertial sensor for detecting acceleration in a first axis, a second inertial sensor for detecting acceleration in a second axis perpendicular to the first axis, a third inertial sensor for detecting acceleration in a third axis perpendicular to the first axis and the second axis, a fourth inertial sensor for detecting rate of rotation in the first axis, a fifth inertial sensor for detecting rate of rotation in the second axis and a sixth inertial sensor for detecting rate of rotation in the third axis, and wherein the processor is further configured to calculate the total acceleration and/or rate of rotation of the inertial measurement unit based on the acceleration and/or rate of rotation of each inertial sensor.

14. An inertial measurement unit according to claim 12 or claim 13, wherein the control of the electrostatic force of an electrode of the one or more electrodes is based on the change in the optical resonance characteristics of a corresponding microresonator.

15. An inertial measurement unit according to any of claims 12 to 14, wherein, for each inertial sensor for detecting rate of rotation, the processor is configured to:

control the electrostatic force of the one or more electrodes to cause the test mass to vibrate at a fixed frequency in a first direction,

wherein the detection of the change in the optical resonance characteristics of the one or more microresonators is in response to the change in the spacing between the test mass and the one or more microresonators in a second direction perpendicular to the first direction at the fixed frequency; and/or

calibrate each inertial sensor by changing the electrostatic force of each electrode and detecting a change in the optical resonance characteristics of each microresonator.

**Patentansprüche**

1. Inertialsensor, wobei der Inertialsensor Folgendes umfasst:

einen oder mehrere Mikroresonatoren (102, 602), wobei jeder Mikroresonator eine entsprechende optische Resonanz unterstützt;
eine mikroelektromechanische Inertialtestmasse (104, 604), die benachbart zu dem einen oder den mehreren Mikroresonatoren und nicht angrenzend daran aufgehängt ist, wobei die Testmasse dicker als jeder Mikroresonator ist und unter der Anwendung einer Inertialkraft auslenkbar ist;
eine oder mehrere Elektroden (106, 606) zum Entgegenwirken einer Auslenkung der Testmasse mit einer elektrostatischen Kraft;
einen oder mehrere optische Koppler (108, 608) zum Koppeln von Licht in einen und aus einem entsprechenden Mikroresonator; und
einen oder mehrere Detektoren (110) zum Detektieren von Licht, das von dem einen oder den mehreren Mikroresonatoren durch den einen oder die mehreren optischen Koppler empfangen wird;
wobei eine Änderung eines Abstands zwischen der Testmasse und zumindest einem Mikroresonator eine Änderung der optischen Resonanzeigenschaften dieses Mikroresonators bewirkt.

2. Inertialsensor nach Anspruch 1, wobei die Testmasse eine durchschnittliche Dicke von mehr als einem Mikrometer aufweist und/oder die Testmasse eine durchschnittliche Dicke in der Größenordnung von Dutzenden oder Hunderten von Mikrometern aufweist.

3. Inertialsensor nach einem vorhergehenden Anspruch, wobei der Abstand zwischen der Testmasse und jedem von dem einen oder den mehreren Mikroresonatoren gleich oder weniger als 1 Mikrometer ist.
3. Inertialsensor nach einem vorhergehenden Anspruch,

wobei der Inertialsensor zumindest zwei Mikroresonatoren, zumindest zwei optische Koppler und zumindest zwei Detektoren umfasst, und wobei eine Änderung eines ersten Abstands zwischen der Testmasse und einem ersten von den zwei Mikroresonatoren und eine Änderung eines zweiten Abstands zwischen der Testmasse und einem zweiten von den zwei Mikroresonatoren eine differenzielle Änderung der optischen Resonanzeigenschaften der zwei Mikroresonatoren bewirkt.

4. Inertialsensor nach einem vorhergehenden Anspruch, wobei die Testmasse zwischen einem ersten Mikroresonator und einem zweiten Mikroresonator aufgehängt ist, und/oder wobei die Testmasse zumindest einen Vorsprung beinhaltet, wobei sich der erste Vorsprung zwischen einem ersten Mikroresonator und einem zweiten Mikroresonator befindet und sich weitere Vorsprünge jeweils zwischen zwei Mikroresonatoren befinden.

5. Inertialsensor nach einem vorhergehenden Anspruch, wobei zumindest zwei der Elektroden jeweils einen Finger beinhalten, der stationär in Bezug auf den Sensor ist und wobei die Testmasse einen Finger beinhaltet, der bewegbar in Bezug auf den Inertialsensor ist, wobei sich der bewegbare Finger der Testmasse zwischen den stationären Fingern der zumindest zwei Elektroden befindet, sodass die Finger der Testmasse und zumindest zwei Elektroden ineinandergreifen.

6. Inertialsensor nach einem vorhergehenden Anspruch, wobei der eine oder die mehreren Mikroresonatoren radial von der Testmasse getrennt sind; und/oder

die eine oder mehreren Elektroden und/oder der eine oder die mehreren Mikroresonatoren relativ zu dem Inertialsensor fixiert sind.

7. Inertialsensor nach einem vorhergehenden Anspruch, wobei der Inertialsensor zum Detektieren von Beschleunigung oder Drehrate ist.

8. Inertialsensor nach einem vorhergehenden Anspruch, wobei der eine oder die mehreren Mikroresonatoren Flüstergalleriemodusresonatoren sind und/oder die Testmasse größer als jeder von dem einen oder den mehreren Mikroresonatoren ist.

9. Inertialsensor nach einem vorhergehenden Anspruch, wobei die eine oder mehreren Elektroden verwendet werden, um die Langzeitstabilitätseigenschaften des Inertialsensors zu steuern.

10. Inertialsensor nach einem vorhergehenden Anspruch, ferner umfassend eine Lichtquelle zum Übertragen von Licht in jeden von dem einen oder den mehreren optischen Kopplern, wobei das Licht, das in jeden von dem einen oder den mehreren optischen Kopplern übertragen wird, Breitbandlicht oder kohärentes Einzelfrequenzlicht ist.

11. Inertialsensor nach einem vorhergehenden Anspruch, wobei die Änderung der optischen Resonanzeigenschaften eine Verschiebung der optischen Resonanz und/oder eine Verbreiterung der optischen Resonanz ist, und/oder
der eine oder die mehreren Mikroresonatoren jeweils eine unterschiedliche optische Resonanz aufweisen.

12. Inertialmesseinheit, umfassend einen oder mehrere Inertialsensoren nach einem der Ansprüche 1 bis 11 und einen Prozessor, wobei der Prozessor zu Folgendem für jeden Inertialsensor konfiguriert ist:

Empfangen eines elektrischen Signals von dem einen oder den mehreren Detektoren;
Detektieren einer Änderung der optischen Resonanzeigenschaften des einen oder der mehreren Mikroresonatoren als Reaktion auf eine Änderung des Abstands zwischen der Testmasse und dem einen oder den mehreren Mikroresonatoren;
Bestimmen der Beschleunigung und/oder Drehrate des Inertialsensors basierend auf der Änderung der optischen Resonanzeigenschaften des einen oder der mehreren Mikroresonatoren; und
Steuern der elektrostatischen Kraft der einen oder mehreren Elektroden basierend auf der Änderung der optischen Resonanzeigenschaften des einen oder der mehreren Mikroresonatoren.

13. Inertialmesseinheit nach Anspruch 12, wobei die Inertialmesseinheit sechs Inertialsensoren nach einem der Ansprüche 1 bis 11 umfasst, wobei die sechs Inertialsensoren einen ersten Inertialsensor zum Detektieren von Beschleunigung in einer ersten Achse, einen zweiten Inertialsensor zum Detektieren von Beschleunigung in einer zweiten Achse senkrecht zu der ersten Achse, einen dritten Inertialsensor zum Detektieren von Beschleunigung in einer dritten Achse senkrecht zu der ersten Achse und der zweiten Achse, einen vierten Inertialsensor zum Detektieren von Drehrate in der ersten Achse, einen fünften Inertialsensor zum Detektieren von Drehrate in der zweiten Achse und einen sechsten Inertialsensor zum Detektieren von Drehrate in der dritten Achse umfassen, und
wobei der Prozessor ferner dazu konfiguriert ist, die Gesamtbeschleunigung und/oder Drehrate der Inertialmesseinheit basierend auf der Beschleunigung und/oder Drehrate jedes Inertialsensors zu berechnen.

14. Inertialmesseinheit nach Anspruch 12 oder Anspruch 13, wobei die Steuerung der elektrostatischen Kraft einer Elektrode der einen oder mehreren Elektroden auf der Änderung der optischen Resonanzeigenschaften eines entsprechenden Mikroresonators basiert.

15. Inertialmesseinheit nach einem der Ansprüche 12 bis 14, wobei für jeden Inertialsensor zum Detektieren von Drehrate der Prozessor zu Folgendem konfiguriert ist:

Steuern der elektrostatischen Kraft der einen oder mehreren Elektroden, um zu bewirken, dass die Testmasse mit einer festen Frequenz in einer ersten Richtung vibriert,
wobei die Detektion der Änderung der optischen Resonanzeigenschaften des einen oder der mehreren Mikroresonatoren als Reaktion auf die Änderung des Abstands zwischen der Testmasse und dem einen oder den mehreren Mikroresonatoren in einer zweiten Richtung senkrecht zu der ersten Richtung bei der festen Frequenz ist; und/oder
Kalibrieren jedes Inertialsensors durch Ändern der elektrostatische Kraft jeder Elektrode und Detektieren einer Änderung der optischen Resonanzeigenschaften jedes Mikroresonators.

**Revendications**

1. Capteur inertiel, le capteur inertiel comprenant :

un ou plusieurs micro-résonateurs (102, 602), chaque micro-résonateur supportant une résonance optique correspondante ;

une masse d'essai inertielle micro-électromécanique (104, 604) suspendue adjacente et non contiguë auxdits un ou plusieurs micro-résonateurs, la masse d'essai étant plus épaisse que chaque micro-résonateur et pouvant être déviée sous l'application d'une force inertielle ;

une ou plusieurs électrodes (106, 606) destinées à contrer une déflexion de la masse d'essai avec une force électrostatique ;

un ou plusieurs coupleurs optiques (108, 608) destinés à coupler la lumière dans un micro-résonateur correspondant et hors de celui-ci ; et

un ou plusieurs détecteurs (110) destinés à détecter la lumière reçue en provenance desdits un ou plusieurs micro-résonateurs par lesdits un ou plusieurs coupleurs optiques ;

un changement d'espacement entre la masse d'essai et au moins un micro-résonateur provoquant un changement des caractéristiques de résonance optique de ce micro-résonateur.

2. Capteur inertiel selon la revendication 1, ladite masse d'essai présentant une épaisseur moyenne de plus d'un micron, et/ou ladite masse d'essai présentant une épaisseur moyenne de l'ordre de dizaines ou de centaines de microns.

3. Capteur inertiel selon l'une quelconque des revendications précédentes, ladite distance entre la masse d'essai et chacun desdits un ou plusieurs micro-résonateurs étant inférieure ou égale à 1 micron.
3. Capteur inertiel selon l'une quelconque des revendications précédentes,

ledit capteur inertiel comprenant au moins deux micro-résonateurs, au moins deux coupleurs optiques et au moins deux détecteurs, et

un changement d'un premier espacement entre la masse d'essai et un premier des deux micro-résonateurs et un changement d'un second espacement entre la masse d'essai et un second des deux micro-résonateurs provoquant un changement différentiel des caractéristiques de résonance optique des deux micro-résonateurs.

4. Capteur inertiel selon l'une quelconque des revendications précédentes, ladite masse d'essai étant suspendue entre un premier micro-résonateur et un second micro-résonateur, et/ou

ladite masse d'essai comprenant au moins une saillie, la première saillie étant située entre un premier micro-résonateur et un second micro-résonateur et d'autres saillies étant situées chacune entre deux micro-résonateurs.

5. Capteur inertiel selon l'une quelconque des revendications précédentes, au moins deux des électrodes comprenant chacune un doigt qui est stationnaire par rapport au capteur et ladite masse d'essai comprenant un doigt qui est mobile par rapport au capteur inertiel, ledit doigt mobile de la masse d'essai étant situé entre les doigts stationnaires desdites au moins deux électrodes de sorte que les doigts de la masse d'essai et au moins deux électrodes soient interdigités.

6. Capteur inertiel selon l'une quelconque des revendications précédentes, lesdits un ou plusieurs micro-résonateurs étant séparés radialement de la masse d'essai ; et/ou

lesdites une ou plusieurs électrodes et/ou lesdits un ou plusieurs micro-résonateurs étant fixes par rapport au capteur inertiel.

7. Capteur inertiel selon l'une quelconque des revendications précédentes, ledit capteur inertiel étant destiné à détecter une accélération ou une vitesse de rotation.

8. Capteur inertiel selon l'une quelconque des revendications précédentes, lesdits un ou plusieurs micro-résonateurs étant des résonateurs en mode de galerie par chuchotement et/ou ladite masse d'essai étant supérieure à chacun desdits un ou plusieurs micro-résonateurs.

9. Capteur inertiel selon l'une quelconque des revendications précédentes, lesdites une ou plusieurs électrodes étant utilisées pour commander les propriétés de stabilité à long terme du capteur inertiel.

10. Capteur inertiel selon l'une quelconque des revendications précédentes, comprenant en outre une source de lumière destinée à transmettre de la lumière dans chacun desdits un ou plusieurs coupleurs optiques, ladite lumière transmise dans chacun desdits un ou plusieurs coupleurs optiques étant une lumière à large bande ou une lumière cohérente à fréquence unique.

11. Capteur inertiel selon l'une quelconque des revendications précédentes, ledit changement des caractéristiques de résonance optique étant un décalage de la résonance optique et/ou un élargissement de la résonance optique, et/ou

lesdits un ou plusieurs micro-résonateurs présentant chacun une résonance optique différente.

12. Unité de mesure inertielle comprenant un ou plusieurs capteurs inertiels selon l'une quelconque des revendications 1 à 11 et un processeur, le processeur étant configuré pour, pour chaque capteur inertiel :

recevoir un signal électrique en provenance desdits un ou plusieurs détecteurs ;
détecter un changement des caractéristiques de résonance optique desdits un ou plusieurs micro-résonateurs en réponse à un changement d'espacement entre la masse d'essai et lesdits un ou plusieurs micro-résonateurs ;
déterminer l'accélération et/ou la vitesse de rotation du capteur inertiel sur la base du changement des caractéristiques de résonance optique desdits un ou plusieurs micro-résonateurs ; et
commander la force électrostatique desdites une ou plusieurs électrodes sur la base du changement des caractéristiques de résonance optique desdits un ou plusieurs micro-résonateurs.

13. Unité de mesure inertielle selon la revendication 12, ladite unité de mesure inertielle comprenant six capteurs inertiels selon l'une quelconque des revendications 1 à 11, lesdits six capteurs inertiels comprenant un premier capteur inertiel destiné à détecter l'accélération suivant un premier axe, un deuxième capteur inertiel destiné à détecter l'accélération suivant un deuxième axe perpendiculaire au premier axe, un troisième capteur inertiel destiné à détecter l'accélération suivant un troisième axe perpendiculaire au premier axe et au deuxième axe, un quatrième capteur inertiel destiné à détecter la vitesse de rotation suivant le premier axe, un cinquième capteur inertiel destiné à détecter la vitesse de rotation suivant le deuxième axe et un sixième capteur inertiel destiné à détecter la vitesse de rotation suivant le troisième axe, et
ledit processeur étant en outre configuré pour calculer l'accélération totale et/ou la vitesse de rotation de l'unité de mesure inertielle sur la base de l'accélération et/ou de la vitesse de rotation de chaque capteur inertiel.

14. Unité de mesure inertielle selon la revendication 12 ou la revendication 13, ladite commande de la force électrostatique d'une électrode desdites une ou plusieurs électrodes étant basée sur le changement des caractéristiques de résonance optique d'un micro-résonateur correspondant.

15. Unité de mesure inertielle selon l'une quelconque des revendications 12 à 14, pour chaque capteur inertiel destiné à détecter la vitesse de rotation, ledit processeur étant configuré pour :

commander la force électrostatique desdites une ou plusieurs électrodes de manière à faire vibrer la masse d'essai à une fréquence fixe suivant une première direction,
ladite détection du changement des caractéristiques de résonance optique desdits un ou plusieurs micro-résonateurs étant en réponse au changement d'espacement entre la masse d'essai et lesdits un ou plusieurs micro-résonateurs suivant une seconde direction perpendiculaire à la première direction à la fréquence fixe ; et/ou
étalonner chaque capteur inertiel en changeant la force électrostatique de chaque électrode et en détectant un changement des caractéristiques de résonance optique de chaque micro-résonateur.

*100*

*116*

ANCHOR

*114*

*104*

TEST-MASS

ELECTRODE

*106*

V

d *112*

*102*

*108*

WAVEGUIDE COUPLER

*110*

DETECTOR

Y

X

# FIG. 1

FIG. 2

*FIG. 3*

**400**

**402**

ACCELERATION OR
RATE OF ROTATION

**406**

**404**

TEST-MASS
DEFLECTION

ELECTROSTATIC
ACTUATION

**406**

CAVITY
OPTOMECHANICAL
TRANSDUCTION

CONTROLLER

**408**

**410**

OUTPUT: LOW NOISE,
LOW DRIFT MEASUREMENT
OF ACCELERATION OR
RATE OF ROTATION

## FIG. 4

FIG. 5

*FIG. 6*

EP 4 314 844 B1

FIG. 7

*FIG. 8*

FIG. 9

*FIG. 10*

*FIG. 11*

Inertial Measurement Unit 1200

Inertial
Sensor 100

Inertial
Sensor 100

Inertial
Sensor 100

Inertial
Sensor 100

Inertial
Sensor 100

Inertial
Sensor 100

Processor
1202

*FIG. 12*

**EP 4 314 844 B1**

**Patent documents cited in the description**

- WO 2020243670 A1